# EUROPEAN PATENT APPLICATION

(11) **EP 4 624 975 A1**
(43) Date of publication of application: **01.10.2025**
(21) Application number: 23906132.8
(22) Date of filing: 22.12.2023
(51) Int. Cl.: G01S 3/80, H04B 11/00

(54) **ORIENTATION MEASUREMENT METHOD AND TERMINAL DEVICE**

(30) Priority: 23.12.2022 CN 202211668396; 21.12.2023 CN 202311779055
(71) Applicant: Huawei Technologies Co., Ltd., Shenzhen, Guangdong 518129 (CN)
(72) Inventor: DU, Zhenguo, Shenzhen, Guangdong 518129 (CN); WANG, Xiaomei, Shenzhen, Guangdong 518129 (CN); WANG, Qi, Shenzhen, Guangdong 518129 (CN); PENG, Lan, Shenzhen, Guangdong 518129 (CN)
(74) Representative: Gill Jennings & Every LLP
(86) International application number: PCT/CN2023/141236
(87) International publication number: WO 2024/131977

(57) **Abstract**

This application provides an orientation measurement method and a terminal device, to consider both auditory experience and an effective distance for measuring an orientation, and may be applied to a communication system. The method includes: A first terminal device receives and/or sends an acoustic wave signal on a first acoustic wave frequency band, to measure a relative orientation between the first terminal device and a second terminal device. The first terminal device obtains first information, where the first information includes first signal strength and distance information between the second terminal device and the first terminal device. The first terminal device determines a target acoustic wave frequency band based on the first information. The first terminal device switches, if the target acoustic wave frequency band is different from the first acoustic wave frequency band, to the target acoustic wave frequency band to continue receiving and/or sending the acoustic wave signal.

## Description

This application claims priorities to Chinese Patent Application No. 202211668396.8, filed with the China National Intellectual Property Administration on December 23, 2022 and entitled "ORIENTATION MEASUREMENT METHOD AND TERMINAL DEVICE", and to Chinese Patent Application No. 202311779055.2, filed with the China National Intellectual Property Administration on December 21, 2023 and entitled "ORIENTATION MEASUREMENT METHOD AND TERMINAL DEVICE", both of which are incorporated herein by reference in their entireties.

### TECHNICAL FIELD

This application relates to the communication field, and in particular, to an orientation measurement method and a terminal device.

### BACKGROUND

When an acoustic wave is used to measure an orientation, an acoustic wave with a higher frequency has less auditory impact on human ears and better auditory experience for the human ears, and an acoustic wave with a lower frequency has greater auditory impact on the human ears and poorer auditory experience for the human ears. An acoustic wave with a higher frequency indicates that a smaller effective distance that can be used to measure an orientation, and an acoustic wave with a lower frequency indicates that a larger effective distance that can be used to measure an orientation. When there is an obstruction, an acoustic wave with a higher frequency attenuates more severely, resulting in a smaller effective distance for measuring an orientation. For example, an orientation is measured by using an acoustic wave ranging from 14 kilohertz (kilohertz, kHz) to 18 kHz. In a scenario in which there is no obstruction, an effective distance for measuring an orientation may reach 20 meters. However, in a scenario in which a terminal device is placed in a cotton cloth bag or the like and is obstructed, an effective distance for measuring an orientation is less than 2 meters.

In conclusion, if an acoustic wave is used to measure an orientation, when a frequency of the acoustic wave is low, auditory experience is poor, and when a frequency of the acoustic wave is high, an effective distance for measuring an orientation is limited. That is, it is difficult for an acoustic wave-based orientation measurement solution to consider both auditory experience and an effective distance for measuring an orientation.

### SUMMARY

Embodiments of this application provide an orientation measurement method and a terminal device, to consider both auditory experience and an effective distance for measuring an orientation.

To achieve the foregoing objective, the following technical solutions are used in this application.

According to a first aspect, an orientation measurement method is provided. The orientation measurement method includes: A first terminal device receives and/or sends an acoustic wave signal on a first acoustic wave frequency band, to measure a relative orientation between the first terminal device and a second terminal device. The first terminal device obtains first information. The first information includes first signal strength and distance information. The first terminal device determines a target acoustic wave frequency band based on the first information. The first information includes the first signal strength and the distance information, and the target acoustic wave frequency band is one of at least two candidate acoustic wave frequency bands. The first terminal device switches, if the target acoustic wave frequency band is different from the first acoustic wave frequency band, to the target acoustic wave frequency band to receive and/or send the acoustic wave signal, to continue measuring the relative orientation between the first terminal device and the second terminal device.

Based on the orientation measurement method provided in the first aspect, the first terminal device receives and/or sends the acoustic wave signal on the first acoustic wave frequency band. The first terminal device obtains the first information, and determines the target acoustic wave frequency band based on the first information including the first signal strength and the distance information. The first terminal device switches, when the target acoustic wave frequency band is different from the first acoustic wave frequency band, to the target acoustic wave frequency band to receive and/or send the acoustic wave signal, to continue measuring the relative orientation between the first terminal device and the second terminal device. In this way, the target acoustic wave frequency band may be determined based on the first signal strength and the distance information, so that the target acoustic wave frequency band matches an actual scenario, for example, the distance between the terminal devices and an obstruction, thereby considering both the auditory experience and the effective distance for measuring the orientation.

In a possible design solution, the first signal strength is signal strength between the second terminal device and the first terminal device. The distance information indicates a first distance between the first terminal device and the second terminal device, or indicates that the distance between the second terminal device and the first terminal device is not detected.

In a possible design solution, that the first terminal device determines a target acoustic wave frequency band based on the first information includes: if the first signal strength and the distance information meet a first condition, determining a first candidate acoustic wave frequency band corresponding to the first condition as the target acoustic wave frequency band; or if the first signal strength and the distance information meet a second condition, determining a second candidate acoustic wave frequency band corresponding to the second condition as the target acoustic wave frequency band. The first condition includes: The first distance is greater than a first distance threshold, and/or the first signal strength is less than or equal to a first strength threshold. The second condition includes: The first distance is less than or equal to a second distance threshold, and the first signal strength is greater than a second strength threshold; or the distance between the first terminal device and the second terminal device is not detected, and the first signal strength is greater than a third strength threshold, where the third strength threshold is greater than the second strength threshold. A frequency of the first candidate acoustic wave frequency band is lower than a frequency of the second candidate acoustic wave frequency band.

In a possible design solution, that the first terminal device determines a target acoustic wave frequency band based on the first information includes: if the first signal strength and the distance information meet a first condition, determining a first candidate acoustic wave frequency band corresponding to the first condition as the target acoustic wave frequency band; if the first signal strength and the distance information meet a second condition, determining a second candidate acoustic wave frequency band corresponding to the second condition as the target acoustic wave frequency band; or if the first signal strength and the distance information meet a third condition, determining a third candidate acoustic wave frequency band corresponding to the third condition as the target acoustic wave frequency band. The first condition includes: The first distance is greater than a first distance threshold, and/or the first signal strength is less than or equal to a first strength threshold. The second condition includes: The first distance is less than or equal to a second distance threshold, and the first signal strength is greater than a second strength threshold; or the distance between the first terminal device and the second terminal device is not detected, and the first signal strength is greater than a third strength threshold, where the third strength threshold is greater than the second strength threshold. The third condition includes: The first distance is greater than the second distance threshold and less than or equal to the first distance threshold, and/or the first signal strength is greater than a fourth strength threshold and less than a fifth strength threshold, where the fourth strength threshold is less than the second strength threshold, and the fifth strength threshold is greater than the first strength threshold. A frequency of the first candidate acoustic wave frequency band is lower than a frequency of the third candidate acoustic wave frequency band, and the frequency of the third candidate acoustic wave frequency band is lower than a frequency of the second candidate acoustic wave frequency band.

In a possible design solution, that the first terminal device determines a target acoustic wave frequency band based on the first information may include: if the first signal strength and the distance information meet the first condition, and candidate acoustic wave frequency bands meeting a fourth condition exist in the at least two candidate acoustic wave frequency bands, determining, as the target acoustic wave frequency band, one of the candidate acoustic wave frequency bands meeting the fourth condition in the at least two candidate acoustic wave frequency bands. The first condition includes: The first distance is greater than a first distance threshold and/or the first signal strength is less than or equal to a first strength threshold. The fourth condition includes: A frequency of the candidate acoustic wave frequency band is lower than a frequency of the first acoustic wave frequency band. In this way, the acoustic wave frequency band in the candidate acoustic wave frequency bands on which the orientation can be measured may be determined as the target acoustic wave frequency band, to measure the orientation, so that both auditory experience and an effective distance for measuring the orientation are considered.

Optionally, the target acoustic wave frequency band may be a candidate acoustic wave frequency band with a highest frequency in the candidate acoustic wave frequency bands meeting the fourth condition. In this way, in the candidate acoustic wave frequency bands, the candidate acoustic wave frequency band with the highest frequency on which an effective distance for measuring the orientation includes the first distance may be determined as the target acoustic wave frequency band, so that auditory experience of the target acoustic wave frequency band and the effective distance for measuring the orientation are better considered.

Further, if two candidate acoustic wave frequency bands whose frequencies are lower than the frequency of the first acoustic wave frequency band exist in the at least two candidate acoustic wave frequency bands, and the first condition includes: The first distance is greater than the first distance threshold, the first condition may further include: The first distance is less than or equal to a third distance threshold. The third distance threshold is greater than the first distance threshold. The third distance threshold is determined based on a candidate acoustic wave frequency band with a higher frequency in the two candidate acoustic wave frequency bands whose frequencies are lower than the frequency of the first acoustic wave frequency band.

In a possible design solution, that the first terminal device determines a target acoustic wave frequency band based on the first information may include: if the first signal strength and the distance information meet a second condition, and candidate acoustic wave frequency bands meeting a fifth condition exist in the at least two candidate acoustic wave frequency bands, determining, as the target acoustic wave frequency band, one of the candidate acoustic wave frequency bands meeting the fifth condition in the at least two candidate acoustic wave frequency bands. The second condition includes: The first distance is less than or equal to a second distance threshold, and the first signal strength is greater than a second strength threshold; or the distance between the first terminal device and the second terminal device is not detected, and the first signal strength is greater than a third strength threshold, where the third strength threshold is greater than the second strength threshold. The fifth condition includes: A frequency of the candidate acoustic wave frequency band is higher than a frequency of the first acoustic wave frequency band. **In** this way, the acoustic wave frequency band in the acoustic wave frequency bands on which the orientation can be measured may be determined as the target acoustic wave frequency band, to measure the orientation, so that both auditory experience and an effective distance for measuring the orientation are considered.

Optionally, the target acoustic wave frequency band may be a candidate acoustic wave frequency band with a lowest frequency in the candidate acoustic wave frequency bands meeting the fifth condition. In this way, on an acoustic wave frequency band whose auditory experience is better than the frequency of the first acoustic wave frequency band, the acoustic wave frequency band on which the orientation can be measured may be determined as the target acoustic wave frequency band, to measure the orientation.

Further, if two candidate acoustic wave frequency bands whose frequencies are higher than a frequency of the first acoustic wave frequency band exist in the at least two candidate acoustic wave frequency bands, and the second condition includes: The first distance is less than or equal to the second distance threshold, the second condition may further include: The first distance is greater than a fourth distance threshold, where the fourth distance threshold is less than the second distance threshold. The fourth distance threshold is determined based on a candidate acoustic wave frequency band with a lower frequency in the two candidate acoustic wave frequency bands whose frequencies are higher than the frequency of the first acoustic wave frequency band. In this way, on an acoustic wave frequency band whose auditory experience is better than auditory experience of the first acoustic wave frequency band, the acoustic wave frequency band on which the orientation can be measured may be determined as the target acoustic wave frequency band, to measure the orientation, so that auditory experience and the effective distance for measuring the orientation are better considered.

In a possible design solution, that the first terminal device switches, if the target acoustic wave frequency band is different from the first acoustic wave frequency band, to the target acoustic wave frequency band to receive and/or send the acoustic wave signal includes: The first terminal device switches, if the target acoustic wave frequency band is different from the first acoustic wave frequency band, and signal strength of an interference signal on the target acoustic wave frequency band is less than or equal to an interference signal threshold, to the target acoustic wave frequency band to receive and/or send the acoustic wave signal. In this way, reliability of measuring the orientation can be improved.

In a possible design solution, the method provided in the first aspect may further include: If the target acoustic wave frequency band is different from the first acoustic wave frequency band, and the signal strength of the interference signal on the target acoustic wave frequency band is greater than the interference signal threshold, the first terminal device receives and/or sends the acoustic wave signal on one candidate acoustic wave frequency band other than the target acoustic wave frequency band in the at least two candidate acoustic wave frequency bands.

In a possible design solution, the method provided in the first aspect may further include: The first terminal device displays first notification information if the target acoustic wave frequency band is different from the first acoustic wave frequency band, and the signal strength of the interference signal on the target acoustic wave frequency band is greater than the interference signal threshold. The first notification information indicates that the signal strength of the interference signal on the target acoustic wave frequency band is greater than the interference signal threshold. In this way, a user can obtain strength of the interference signal on the target acoustic wave frequency band in time, so that the strength of the interference signal may be indicated to the user in a manner that can be sensed by the user, thereby improve user experience.

In a possible design solution, that the first terminal device determines a target acoustic wave frequency band based on the first information may include: if the first acoustic wave frequency band is an acoustic wave frequency band with a lowest frequency in the at least two candidate acoustic wave frequency bands, and the first signal strength and the distance information meet the first condition, determining the first acoustic wave frequency band as the target frequency band. The first condition may include: The first distance is greater than a first distance threshold, and the first signal strength is less than or equal to a first strength threshold.

If the first acoustic wave frequency band is an acoustic wave frequency band with a highest frequency in the at least two candidate acoustic wave frequency bands, and the first signal strength and the distance information meet the second condition, the first acoustic wave frequency band is determined as the target frequency band. The second condition may include: The first distance is less than or equal to a second distance threshold, and the first signal strength is greater than the second strength threshold.

If the frequency of the first acoustic wave frequency band is an acoustic wave frequency band other than the acoustic wave frequency band with the highest frequency and the acoustic wave frequency band with the lowest frequency in the at least two candidate acoustic wave frequency bands, the first distance is greater than the second distance threshold, and the first distance is less than or equal to the first distance threshold; and/or the first signal strength is greater than a fourth strength threshold, and the first signal strength is less than or equal to a fifth strength threshold. The fourth strength threshold is less than the second strength threshold, and the fifth strength threshold is greater than the first strength threshold. In this case, the second distance threshold is less than the first distance threshold, and the fourth strength threshold is less than the fifth strength threshold.

In a possible design solution, the first information may further include second signal strength of an interference signal on each of the at least two candidate acoustic wave frequency bands. That the first terminal device determines a target acoustic wave frequency band based on the first information may include: The first terminal device determines the target acoustic wave frequency band based on the first signal strength, the distance information, and the second signal strength on each of the at least two candidate acoustic wave frequency bands. In this way, both auditory experience and an effective distance for measuring the orientation can be considered, and reliability of a measurement result can be further improved.

Optionally, that the first terminal device determines the target acoustic wave frequency band based on the first signal strength, the distance information, and the second signal strength on each of the at least two candidate acoustic wave frequency bands may include: If the first signal strength and the distance information meet the first condition, and candidate acoustic wave frequency bands meeting a sixth condition exist in the at least two candidate acoustic wave frequency bands, determining, as the target acoustic wave frequency band, one of the candidate acoustic wave frequency bands meeting the sixth condition in the at least two candidate acoustic wave frequency bands. The first condition may include: The first distance is greater than a first distance threshold, and/or the first signal strength is less than or equal to a first strength threshold. The sixth condition may include: Second signal strength of an interference signal on a candidate acoustic wave frequency band is less than or equal to a first interference threshold corresponding to the candidate acoustic wave frequency band, and a frequency of the candidate acoustic wave frequency band is lower than the frequency of the first acoustic wave frequency band.

Alternatively, optionally, that the first terminal device determines the target acoustic wave frequency band based on the first signal strength, the distance information, and the second signal strength on each of the at least two candidate acoustic wave frequency bands may include: If the first signal strength and the distance information meet a seventh condition, the first acoustic wave frequency band meets an eighth condition, and candidate acoustic wave frequency bands meeting a ninth condition exist in the at least two candidate acoustic wave frequency bands, determining, as the target acoustic wave frequency band, one of the candidate acoustic wave frequency bands meeting the ninth condition in the at least two candidate acoustic wave frequency bands. The seventh condition may include: The first distance is less than or equal to a first distance threshold, and/or the first signal strength is greater than a first strength threshold. The eighth condition may include: Second signal strength of an interference signal on the first acoustic wave frequency band is greater than a second interference threshold corresponding to the first acoustic wave frequency band. The ninth condition may include: Second signal strength of an interference signal on a candidate acoustic wave frequency band is less than or equal to a first interference threshold corresponding to the candidate acoustic wave frequency band, and a frequency of the candidate acoustic wave frequency band is lower than the frequency of the first acoustic wave frequency band.

Alternatively, optionally, that the first terminal device determines the target acoustic wave frequency band based on the first signal strength, the distance information, and the second signal strength on each of the at least two candidate acoustic wave frequency bands may include: If the first signal strength and the distance information meet the second condition, and candidate acoustic wave frequency bands meeting a tenth condition exist in the at least two candidate acoustic wave frequency bands, determining, as the target acoustic wave frequency band, one of the candidate acoustic wave frequency bands meeting the tenth condition in the at least two candidate acoustic wave frequency bands. The second condition may include: The first distance is less than or equal to a third distance threshold, and the first signal strength is greater than a second strength threshold; or the distance between the first terminal device and the second terminal device is not detected, and the first signal strength is greater than a third strength threshold, where the third strength threshold is greater than the second strength threshold. The tenth condition may include: Second signal strength of an interference signal on a candidate acoustic wave frequency band is less than or equal to a third interference threshold corresponding to the candidate acoustic wave frequency band, and a frequency of the candidate acoustic wave frequency band is higher than the frequency of the first acoustic wave frequency band.

Alternatively, optionally, that the first terminal device determines the target acoustic wave frequency band based on the first signal strength, the distance information, and the second signal strength on each of the at least two candidate acoustic wave frequency bands may include: if the first signal strength and the distance information meet an eleventh condition, the first acoustic wave frequency band meets a twelfth condition, and candidate acoustic wave frequency bands meeting a thirteenth condition exist in the at least two candidate acoustic wave frequency bands, determining, as the target acoustic wave frequency band, one of the candidate acoustic wave frequency bands meeting the thirteenth condition in the at least two candidate acoustic wave frequency bands. The eleventh condition may include: The first distance is greater than a second distance threshold, and/or the first signal strength is less than or equal to a second strength threshold. The twelfth condition includes: Second signal strength of an interference signal on the first acoustic wave frequency band is greater than a third interference threshold corresponding to the first acoustic wave frequency band. The thirteenth condition may include: Second signal strength of an interference signal on a candidate acoustic wave frequency band is less than or equal to a fourth interference threshold corresponding to the candidate acoustic wave frequency band.

In a possible design solution, that the first terminal device determines the target acoustic wave frequency band based on the first signal strength, the distance information, and the second signal strength on each of the at least two candidate acoustic wave frequency bands may include: determining the first acoustic wave frequency band as the target acoustic wave frequency band if the first acoustic wave frequency band is an acoustic wave frequency band with a lowest frequency in the at least two candidate acoustic wave frequency bands, the first information meets the first condition, and the second signal strength of the interference signal on the first acoustic wave frequency band is less than or equal to a fifth interference threshold; or determining the first acoustic wave frequency band as the target acoustic wave frequency band if the first acoustic wave frequency band is an acoustic wave frequency band with a lowest frequency in the at least two candidate acoustic wave frequency bands, the first information meets the seventh condition, and the second signal strength of the interference signal on the first acoustic wave frequency band is less than or equal to a fifth interference threshold. The first condition includes: The first distance is greater than a first distance threshold and/or the first signal strength is less than or equal to a first strength threshold.

The first acoustic wave frequency band is determined as the target acoustic wave frequency band if the first acoustic wave frequency band is an acoustic wave frequency band with a highest frequency in the at least two candidate acoustic wave frequency bands, the first acoustic wave frequency band meets the second condition, and the second signal strength of the interference signal on the first acoustic wave frequency band is less than or equal to a fifth interference threshold, the first acoustic wave frequency band is determined as the target acoustic wave frequency band. Alternatively, if the first acoustic wave frequency band is an acoustic wave frequency band with a lowest frequency in the at least two candidate acoustic wave frequency bands, the first information meets an eleventh condition, and the second signal strength of the interference signal on the first acoustic wave frequency band is less than or equal to a fifth interference threshold. The eleventh condition includes: The first distance is greater than a second distance threshold, and/or the first signal strength is less than or equal to a second strength threshold.

The first acoustic wave frequency band is determined as the target acoustic wave frequency band if the first acoustic wave frequency band is an acoustic wave frequency band other than an acoustic wave frequency band with a highest frequency and an acoustic wave frequency band with a lowest frequency in the at least two candidate acoustic wave frequency bands, the first information meets a third condition, and the second signal strength of the interference signal on the first acoustic wave frequency band is less than or equal to a fifth interference threshold. The third condition includes: The first distance is greater than a second distance threshold, and the first distance is less than or equal to a first distance threshold; and/or the first signal strength is greater than a fourth strength threshold, and the first signal strength is less than or equal to a fifth strength threshold. The fourth strength threshold is less than the second strength threshold, and the fifth strength threshold is greater than the first strength threshold. It may be understood that in this case, the second distance threshold is less than the first distance threshold, and the fourth strength threshold is less than the fifth strength threshold.

In a possible design solution, the first signal strength may include signal strength of one or more of the following signals: a radio frequency signal or an acoustic wave signal.

In a possible design solution, the first strength threshold, the second strength threshold, the third strength threshold, the fourth strength threshold, or the fifth strength threshold is associated with the frequency of the first acoustic wave frequency band.

In a possible design solution, if the at least two candidate acoustic wave frequency bands include two candidate acoustic wave frequency bands, the first acoustic wave frequency band is one of the two candidate acoustic wave frequency bands, and a frequency of the first acoustic wave frequency band is higher than a frequency of a fourth candidate acoustic wave frequency band, where the fourth candidate acoustic wave frequency band is a candidate acoustic wave frequency band other than the first acoustic wave frequency band in the two candidate acoustic wave frequency bands, and the first information further includes signal strength of an interference signal on the fourth candidate acoustic wave frequency band, the determining, by the first terminal device, a target acoustic wave frequency band based on the first information includes: determining the fourth candidate acoustic wave frequency band as the target acoustic wave frequency band if the first information meets a fourteenth condition. The fourteenth condition includes: the first signal strength is less than or equal to a sixth strength threshold, and the signal strength of the interference signal on the fourth candidate acoustic wave frequency band is less than or equal to an interference signal threshold corresponding to the fourth candidate acoustic wave frequency band. The sixth strength threshold is determined based on the first distance. In this way, when the signal strength of the interference signal on the first acoustic wave frequency band is less than or equal to the interference signal threshold corresponding to the fourth candidate acoustic wave frequency band, switching to the fourth candidate acoustic wave frequency band is then performed for measuring the orientation, so that an acoustic wave with a higher frequency band may be used as much as possible for orientation measurement, thereby improving auditory experience of the user, and improving accuracy or precision of an orientation measurement result.

Optionally, that the first signal strength is less than or equal to a sixth strength threshold means that in M1 times of signal strength and interference signal measurement, the first signal strength obtained in each time of measurement is less than or equal to the sixth strength threshold. That the signal strength of the interference signal on the fourth candidate acoustic wave frequency band is less than or equal to an interference signal threshold corresponding to the fourth candidate acoustic wave frequency band means that in the M1 times of signal strength and interference signal measurement, the signal strength that is of the interference signal on the fourth candidate acoustic wave frequency band and that is obtained in each time of measurement is less than or equal to the interference signal threshold corresponding to the fourth candidate acoustic wave frequency band. M1 is an integer greater than or equal to 1. Determining is performed based on results of a plurality of times of signal strength and interference signal measurement, so that a signal status can be more accurately reflected, and incorrect switching of an acoustic wave frequency caused by occasional signal fluctuation is avoided.

In a possible design solution, if the at least two candidate acoustic wave frequency bands include two candidate acoustic wave frequency bands, the first acoustic wave frequency band is one of the two candidate acoustic wave frequency bands, and a frequency of the first acoustic wave frequency band is lower than a frequency of a fifth candidate acoustic wave frequency band, where the fifth candidate acoustic wave frequency band is a candidate acoustic wave frequency band other than the first acoustic wave frequency band in the two candidate acoustic wave frequency bands, and the first information further includes signal strength of an interference signal on the first acoustic wave frequency band, the determining, by the first terminal device, a target acoustic wave frequency band based on the first information includes: determining the fifth candidate acoustic wave frequency band as the target acoustic wave frequency band if the first information meets a fifteenth condition. The fifteenth condition includes: the first signal strength is greater than a seventh strength threshold, and/or the signal strength of the interference signal on the first acoustic wave frequency band is greater than an interference signal threshold corresponding to the fifth candidate acoustic wave frequency band, where the seventh strength threshold is determined based on the first distance. In this way, when the first signal strength on the first acoustic wave frequency band is greater than the seventh strength threshold, or an interference signal on the fifth candidate acoustic wave frequency band is greater than the interference signal threshold corresponding to the fifth candidate acoustic wave frequency band, the first acoustic wave frequency band may still be used for the orientation measurement, that is, usage of an acoustic wave with a lower frequency is reduced, so that auditory experience of the user is improved, and accuracy of an orientation measurement result is improved.

Optionally, that the first signal strength is less than or equal to a seventh strength threshold means that in M2 times of signal strength measurement, the first signal strength obtained in each time of signal strength measurement is less than or equal to the seventh strength threshold. M2 is an integer greater than or equal to 1. That the signal strength of the interference signal on the first acoustic wave frequency band is greater than an interference signal threshold corresponding to the fifth candidate acoustic wave frequency band means that in M3 times of interference signal measurement, the signal strength that is of the interference signal on the first acoustic wave frequency band and that is obtained in each time of interference signal measurement is greater than the interference signal threshold corresponding to the fifth candidate acoustic wave frequency band. M3 is an integer greater than or equal to 1. Determining is performed based on results of a plurality of times of signal strength measurement and interference signal measurement, so that a signal status can be more accurately reflected, and incorrect switching of an acoustic wave frequency caused by occasional signal fluctuation is avoided.

In a possible design solution, the method provided in the first aspect may further include: The first terminal device sends second information to the second terminal device if the target acoustic wave frequency band is different from the first acoustic wave frequency band. The second information indicates the second terminal device to switch to the target acoustic wave frequency band.

Optionally, that the first terminal device sends second information to the second terminal device includes: The first terminal device sends the second information to the second terminal device over a radio frequency communication link.

Optionally, that the first terminal device switches, if the target acoustic wave frequency band is different from the first acoustic wave frequency band, to the target acoustic wave frequency band to receive and/or send the acoustic wave signal includes: The first terminal device switches, if the target acoustic wave frequency band is different from the first acoustic wave frequency band, and the first terminal device receives acknowledgement information from the second terminal device, to the target acoustic wave frequency band to receive and/or send the acoustic wave signal. The acknowledgement information indicates that the second terminal device successfully receives the second information.

Further, that the first terminal device receives acknowledgement information from the second terminal device includes: The first terminal device receives the acknowledgement information from the second terminal device within a first duration threshold after sending the second information.

Optionally, the orientation measurement method provided in the first aspect may further include: If the first terminal device receives acknowledgement information from the second terminal device within a first duration threshold, before receiving the acknowledgement information, the first terminal device receives and/or sends the acoustic wave signal on the first acoustic wave frequency band, and receives and/or sends the acoustic wave signal on the target acoustic wave frequency band. If the first terminal device does not receive the acknowledgement information from the second terminal device within the first duration threshold, within the first duration threshold, the first terminal device receives and/or sends the acoustic wave signal on the first acoustic wave frequency band, and receives and/or sends the acoustic wave signal on the target acoustic wave frequency band. If the first terminal device does not receive the acknowledgement information from the second terminal device within the first duration threshold, the first terminal device receives and/or sends the acoustic wave signal on the first acoustic wave frequency band after the first duration threshold. The acknowledgement information indicates that the second terminal device successfully receives the second information.

In a possible design solution, the first acoustic wave frequency band is determined based on a second distance between the first terminal device and the second terminal device, and the second distance is a distance obtained based on a radio frequency signal between the first terminal device and the second terminal device.

It may be understood as that in this embodiment of this application, if the target acoustic wave frequency band is the same as the first acoustic wave frequency band, the first terminal device continues receiving and/or sending the acoustic wave signal on the first acoustic wave frequency band without switching the acoustic wave frequency band, to continue measuring the relative orientation between the first terminal device and the second terminal device.

According to a second aspect, an orientation measurement method is provided. The orientation measurement method includes: A second terminal device receives second information from a first terminal device. The second information indicates the second terminal device to switch to a target acoustic wave frequency band. The second terminal device switches to the target acoustic wave frequency band to receive and/or send an acoustic wave signal.

In addition, for technical effects of the orientation measurement method according to the second aspect, refer to technical effects of the orientation measurement method according to the first aspect. Details are not described herein again.

According to a third aspect, an apparatus is provided. The apparatus is configured to perform the orientation measurement method according to any one of the implementations of the first aspect and the second aspect.

In this application, the apparatus according to the third aspect may be the first terminal device according to the first aspect, may be a chip (system) or another part or component disposed in the first terminal device, or may be an apparatus including the first terminal device. Alternatively, the apparatus according to the third aspect may be the second terminal device according to the second aspect, may be a chip (system) or another part or component disposed in the second terminal device, or may be an apparatus including the second terminal device.

It should be understood that the apparatus according to the third aspect includes a corresponding module, unit, or means (means) for implementing the orientation measurement method according to either of the first aspect and the second aspect. The module, unit, or means may be implemented by hardware, software, or hardware executing corresponding software. The hardware or software includes one or more modules or units configured to perform functions related to the foregoing orientation measurement method.

According to a fourth aspect, an apparatus is provided. The apparatus includes a processor. The processor is configured to perform the orientation measurement method according to any one of the possible implementations of the first aspect and the second aspect.

In a possible design solution, the apparatus according to the fourth aspect may further include a transceiver. The transceiver may be a transceiver circuit or an interface circuit. The transceiver may be used by the apparatus according to the fourth aspect to communicate with another apparatus.

In a possible design solution, the apparatus according to the fourth aspect may further include a storage. The storage and the processor may be integrated together, or may be disposed separately. The storage may be configured to store a computer program and/or data in the orientation measurement method according to either of the first aspect and the second aspect.

In this application, the apparatus according to the fourth aspect may be the first terminal device according to the first aspect, may be a chip (system) or another part or component disposed in the first terminal device, or may be an apparatus including the first terminal device. Alternatively, the apparatus according to the fourth aspect may be the second terminal device according to the second aspect, may be a chip (system) or another part or component disposed in the second terminal device, or may be an apparatus including the second terminal device.

According to a fifth aspect, a terminal apparatus is provided. The apparatus includes a processor. The processor is coupled to a storage, and the processor is configured to execute a computer program stored in the storage, to enable the apparatus to perform the orientation measurement method according to any one of the possible implementations of the first aspect and the second aspect.

In a possible design solution, the apparatus according to the fifth aspect may further include a transceiver. The transceiver may be a transceiver circuit or an interface circuit. The transceiver may be used by the apparatus according to the fifth aspect to communicate with another terminal device.

In this application, the apparatus according to the fifth aspect may be the first terminal device according to the first aspect, may be a chip (system) or another part or component disposed in the first terminal device, or may be an apparatus including the first terminal device. Alternatively, the apparatus according to the fifth aspect may be the second terminal device according to the second aspect, may be a chip (system) or another part or component disposed in the second terminal device, or may be an apparatus including the second terminal device.

According to a sixth aspect, an apparatus is provided, including a processor and a storage. The storage is configured to store a computer program. When the processor executes the computer program, the apparatus is enabled to perform the orientation measurement method according to any one of the implementations of the first aspect and the second aspect.

In a possible design solution, the apparatus according to the sixth aspect may further include a transceiver. The transceiver may be a transceiver circuit or an interface circuit. The transceiver may be used by the apparatus according to the sixth aspect to communicate with another apparatus.

In this application, the apparatus according to the sixth aspect may be the first terminal device according to the first aspect, may be a chip (system) or another part or component disposed in the first terminal device, or may be an apparatus including the first terminal device. Alternatively, the apparatus according to the sixth aspect may be the second terminal device according to the second aspect, may be a chip (system) or another part or component disposed in the second terminal device, or may be an apparatus including the second terminal device.

According to a seventh aspect, an apparatus is provided, including a processor. After being coupled to a storage and reading a computer program in the storage, the processor is configured to perform the orientation measurement method according to any one of the implementations of the first aspect and the second aspect based on the computer program.

In a possible design solution, the apparatus according to the seventh aspect may further include a transceiver. The transceiver may be a transceiver circuit or an interface circuit. The transceiver may be used by the apparatus according to the seventh aspect to communicate with another apparatus.

In this application, the apparatus according to the seventh aspect may be the first terminal device according to the first aspect, may be a chip (system) or another part or component disposed in the first terminal device, or may be an apparatus including the first terminal device. Alternatively, the apparatus according to the seventh aspect may be the second terminal device according to the second aspect, may be a chip (system) or another part or component disposed in the second terminal device, or may be an apparatus including the second terminal device.

According to an eighth aspect, a terminal device is provided. The terminal device includes a processor and a transceiver. The transceiver is configured to exchange information between the terminal device and another terminal device, and the processor executes program instructions, to enable the terminal device to perform the orientation measurement method according to either of the first aspect and the second aspect.

According to a ninth aspect, a processor is provided. The processor is configured to perform the orientation measurement method according to any one of the possible implementations of the first aspect and the second aspect.

According to a tenth aspect, a communication system is provided. The communication system includes a second terminal device and a first terminal device.

The first terminal device may be configured to perform the method according to any one of the implementations of the first aspect, and the second terminal device may perform the method according to the second aspect.

According to an eleventh aspect, a computer-readable storage medium is provided, including a computer program or instructions. When the computer program or the instructions are run on a computer, the computer is enabled to perform the orientation measurement method according to any one of the possible implementations of the first aspect and the second aspect.

According to a twelfth aspect, a computer program product is provided, including a computer program or instructions. When the computer program or the instructions are run on a computer, the computer is enabled to perform the orientation measurement method according to any one of the possible implementations of the first aspect and the second aspect.

In addition, for technical effects of the third aspect to the twelfth aspect, refer to technical effects of the orientation measurement methods according to the first aspect and the second aspect. Details are not described herein again.

### BRIEF DESCRIPTION OF DRAWINGS

FIG. 1 is a diagram of an architecture of a communication system according to an embodiment of this application;
FIG. 2 is a diagram of an architecture of a mobile phone according to an embodiment of this application;
FIG. 3 is a diagram 1 of an application scenario of an orientation measurement method according to an embodiment of this application;
FIG. 4 is a diagram 2 of an application scenario of an orientation measurement method according to an embodiment of this application;
FIG. 5 is a diagram 3 of an application scenario of an orientation measurement method according to an embodiment of this application;
FIG. 6 is a diagram 4 of an application scenario of an orientation measurement method according to an embodiment of this application;
FIG. 7A is a schematic flowchart of an orientation measurement method according to an embodiment of this application;
FIG. 7B is a schematic flowchart of another orientation measurement method according to an embodiment of this application;
FIG. 7C is a schematic flowchart of another orientation measurement method according to an embodiment of this application;
FIG. 7D is a schematic flowchart of another orientation measurement method according to an embodiment of this application;
FIG. 7E is a schematic flowchart of another orientation measurement method according to an embodiment of this application;
FIG. 7F is a schematic flowchart of another orientation measurement method according to an embodiment of this application;
FIG. 8 is a diagram 1 of a conversion relationship between target acoustic wave frequency bands according to an embodiment of this application;
FIG. 9 is a diagram 2 of a conversion relationship between target acoustic wave frequency bands according to an embodiment of this application;
FIG. 10 is a diagram 3 of a conversion relationship between target acoustic wave frequency bands according to an embodiment of this application;
FIG. 11 is a diagram 1 of an interface of a first terminal device according to an embodiment of this application;
FIG. 12 is a schematic flowchart of another orientation measurement method according to an embodiment of this application;
FIG. 13(a) to FIG. 13(c) are a schematic flowchart of another orientation measurement method according to an embodiment of this application;
FIG. 14 is a schematic flowchart of another orientation measurement method according to an embodiment of this application;
FIG. 15(a) to FIG. 15(c) are a schematic flowchart of another orientation measurement method according to an embodiment of this application;
FIG. 16 is a schematic flowchart of another orientation measurement method according to an embodiment of this application;
FIG. 17(a) to FIG. 17(c) are a schematic flowchart of another orientation measurement method according to an embodiment of this application;
FIG. 18 is a diagram of a position relationship between a microphone and a speaker according to an embodiment of this application;
FIG. 19 is a diagram 2 of an interface of a first terminal device according to an embodiment of this application;
FIG. 20 is a diagram of a process change of an orientation measurement method according to an embodiment of this application; and
FIG. 21 is a diagram of an architecture of a terminal device according to an embodiment of this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application.

The terms "including" "having" and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The terms such as "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In embodiments of this application, the term such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word "example", "for example", or the like is intended to present a related concept in a specific manner.

In the descriptions of embodiments of this application, unless otherwise stated, "a plurality of" means two or more. The term "and/or" in this specification describes only an association relationship for describing associated objects and indicates that there may be three relationships. For example, A and/or B may represent the following three cases: Only A exists, both A and B exist, and only B exists.

In life, an owner of an item may forget a position at which the item is placed, and consequently, a large amount of time needs to be spent in searching for the item. Alternatively, in a loss prevention scenario, for example, loss prevention for an elderly person, a child, a pet, an item, or the like, an orientation of the elderly person, the child, the pet, the item, or the like needs to be determined.

In a scenario such as item searching or loss prevention, a person, a pet, an item, or the like may be bound to a second terminal device with a signal transceiver function, for example, a tag (tag), and an orientation of the person, the pet, the item, or the like is determined through cooperation between a first terminal device and a second terminal device. The orientation may include a distance and/or a direction. The distance may be determined through ranging, and the direction may be determined through angle measurement. For example, the item may be placed together with the second terminal device with the signal transceiver function, or a second terminal device with a signal transceiver function that may be worn by a person or a pet. Then, the first terminal device, for example, a mobile phone, may cooperate with the second terminal device to implement a ranging function, to determine a distance between the second terminal device and the first terminal device, and/or the first terminal device cooperates with the second terminal device to implement an angle measurement function, to determine an orientation of the second terminal device relative to the first terminal device. In this way, the orientation of the person, the pet, the item, or the like can be determined based on a position of the second terminal device, so that a position of the item or the pet can be determined more conveniently.

In some possible embodiments, the orientation may be measured based on an ultra-wideband (ultra-wideband, UWB) technology. In a UWB-based orientation measurement solution, a ranging function and/or an angle measurement function need/needs to be implemented between the second terminal device and the first terminal device based on a UWB signal, to measure the orientation. Therefore, both hardware of the second terminal device and hardware of the first terminal device need to support the UWB technology. A terminal device that does not support the UWB technology cannot measure an orientation by using the UWB technology. It can be learned that an application scope of a solution for measuring an orientation based on the UWB technology is small.

Because most terminal devices can support functions of receiving and sending an acoustic wave, to improve the application scope of the solution for measuring the orientation, in some other embodiments, an orientation may be measured based on an acoustic wave. The acoustic wave includes an audible acoustic wave and an inaudible acoustic wave. For human ears, an acoustic wave of 20 hertz (hertz, Hz) to 20 kHz is audible acoustic wave, and an ultrasonic wave of more than 20 kHz is an inaudible acoustic wave. For most persons, an acoustic wave of more than 18 kHz cannot be heard.

The acoustic wave has the following three features:
Feature 1: An acoustic wave with a higher frequency (closer to an ultrasonic frequency band) is less likely to be heard by the human ears, and an acoustic wave with a lower frequency is more likely to be heard by the human ears.
Feature 2: The acoustic wave has a characteristic of attenuation with a distance. An acoustic wave with a higher frequency attenuates more severely with a distance, and a propagation distance is smaller. An acoustic wave with a lower frequency attenuates more slightly with a distance, and a propagation distance is larger.
Feature 3: An acoustic wave with a higher frequency is more likely to be obstructed, for example, absorbed, by an obstruction. When the acoustic wave penetrates the obstruction, attenuation is severer, and a larger propagation distance decreases. An acoustic wave with a lower frequency is less likely to be absorbed by an obstruction. When the acoustic wave penetrates the obstruction, attenuation is slighter, and a smaller propagation distance decreases.

Therefore, when an acoustic wave is used to measure an orientation, due to impact of Feature 1, an acoustic wave with a higher frequency has less auditory impact on human ears and better auditory experience for the human ears. An acoustic wave with a lower frequency has greater auditory impact on the human ears and poorer auditory experience for the human ears. Due to impact of Feature 2, the acoustic wave with the higher frequency indicates that a smaller effective distance that can be used to measure an orientation, and the acoustic wave with the lower frequency indicates that a larger effective distance that can be used to measure an orientation. Due to impact of Feature 3, when there is the obstruction, the acoustic wave with the higher frequency attenuates more severely, resulting in a smaller effective distance for measuring an orientation. For example, an orientation is measured by using an acoustic wave ranging from 14 kHz to 18 kHz. In a scenario in which there is no obstruction, an effective distance for measuring an orientation may reach 20 meters. However, in a scenario in which a terminal device is placed in a cotton bag or the like and is obstructed, an effective distance for measuring an orientation is less than 2 meters. In conclusion, if an acoustic wave is used to measure an orientation, when a frequency of the acoustic wave is low, auditory experience is poor, and when a frequency of the acoustic wave is high, an effective distance for measuring an orientation is limited. That is, it is difficult for an acoustic wave-based orientation measurement solution to consider both auditory experience and an effective distance for measuring an orientation.

To resolve the foregoing problem, an embodiment of this application provides an orientation measurement method. In the orientation measurement method, a first terminal device obtains first information. The first information includes a first distance between the first terminal device and a second terminal device and first signal strength between the first terminal device and the second terminal device. The first terminal device may determine, based on the first information, a target acoustic wave frequency band used to measure an orientation, and send and/or receive an acoustic wave signal on the target acoustic wave frequency band when the determined target acoustic wave frequency band and a frequency band that is currently actually used between the second terminal device and the first terminal device to operate change, to determine a relative orientation between the first terminal device and the second terminal device. In this way, the orientation may be measured between the first terminal device and the second terminal device by using the target acoustic wave frequency band. Because the target acoustic wave frequency band is determined based on the first signal strength and the distance information, the target acoustic wave frequency band may match an actual scenario, for example, a distance between terminal devices or an obstruction, so that both auditory experience and an effective distance for measuring the orientation are considered.

A network architecture and a service scenario that are described in embodiments of this application are intended to describe the technical solutions in embodiments of this application more clearly, and do not constitute a limitation on the technical solutions provided in this embodiment of this application. A person of ordinary skill in the art may know that, with evolution of the network architecture and emergence of new service scenarios, the technical solutions provided in embodiments of this application are also applicable to similar technical problems.

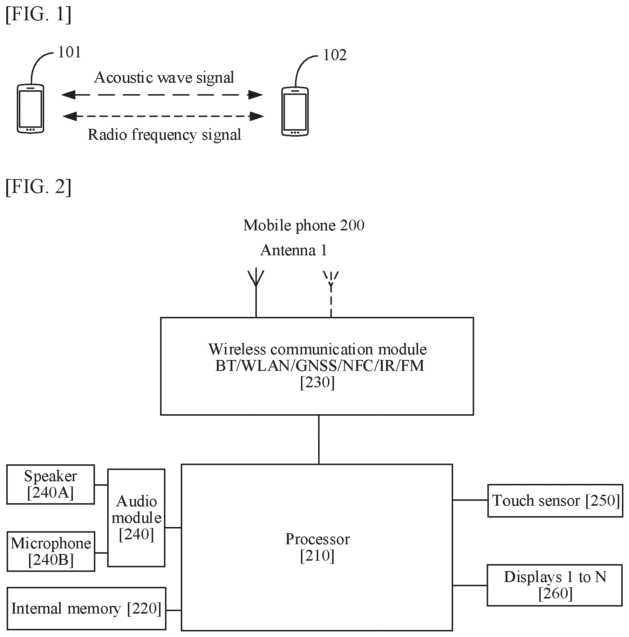

For ease of understanding this application, a communication system shown in FIG. 1 is first used as an example to describe in detail a communication system applicable to an embodiment of this application. For example, FIG. 1 is a diagram of an architecture of a communication system applicable to an orientation measurement method according to an embodiment of this application.

As shown in FIG. 1, the communication system includes a first terminal device 101 and a second terminal device 102.

A communication connection, for example, a Bluetooth connection or a wireless fidelity (wireless fidelity, Wi-Fi) connection, may be established between the first terminal device 101 and the second terminal device 102 based on a radio frequency signal. That is, a radio frequency communication link may be established between the first terminal device 101 and the second terminal device 102, to perform transmission of a radio frequency signal.

In addition, an acoustic wave signal may be further transmitted between the first terminal device 101 and the second terminal device 102.

The first terminal device 101 is a terminal that accesses the foregoing communication system and has an acoustic wave receiving function and/or an acoustic wave sending function, or a chip or a chip system that may be disposed in the terminal. For example, the first terminal device 101 may be a tag (Tag), a device including a tag, a mobile phone, a tablet computer, a personal computer (personal computer, PC), a stylus, a headset, an internet of things (internet of things, IoT) device, an ultra-mobile personal computer (ultra-mobile personal computer, UMPC), a handheld computer, a netbook, a personal digital assistant (personal digital assistant, PDA), a wearable electronic device, a vehicle-mounted device, a virtual reality device, or the like.

The second terminal device 102 is a terminal that accesses the foregoing communication system and has an acoustic wave receiving function and/or an acoustic wave sending function, or a chip or a chip system that may be disposed in the terminal. For example, the first terminal device may be a mobile phone, a tablet computer, a PC, a stylus, a headset, an IoT device, a UMPC, a handheld computer, a netbook, a PDA, a wearable electronic device, a vehicle-mounted device, a virtual reality device, or the like.

It may be understood that at least one of the first terminal device 101 and the second terminal device 102 has the acoustic wave receiving function, and a terminal device other than the terminal device having the acoustic wave receiving function in the first terminal device 101 and the second terminal device 102 has the acoustic wave sending function. For example, if the first terminal device 101 has the acoustic wave receiving function, the second terminal device 102 has the acoustic wave sending function. For another example, if the second terminal device 102 has the acoustic wave receiving function, the first terminal device 101 has the acoustic wave sending function. For another example, if the first terminal device 101 has the acoustic wave receiving function and the acoustic wave sending function, the second terminal device 102 may have the acoustic wave receiving function and/or the acoustic wave sending function.

In some possible design solutions, the first terminal device 101 may further have a wireless transceiver function, for example, a Bluetooth signal transceiver function or a Wi-Fi signal transceiver function.

In some possible design solutions, the second terminal device 102 may further have a wireless transceiver function, for example, a Bluetooth signal transceiver function or a Wi-Fi signal transceiver function.

It should be understood that FIG. 1 is merely a simplified diagram of an example for ease of understanding. The communication system may further include a network device and/or another terminal device that are/is not shown in FIG. 1.

For ease of understanding, the following uses an example to describe a structure of the related first terminal device 101 in this embodiment of this application.

An example in which the first terminal device 101 is a mobile phone is used. FIG. 2 is a diagram of a structure of a mobile phone according to an embodiment of this application. FIG. 2 is a diagram of a structure of a mobile phone 200.

The mobile phone 200 may include a processor 210, a memory 220, an antenna 1, a wireless communication module 230, an audio module 240, a speaker 240A, a microphone 240B, a touch sensor 250, a display 260, and the like.

It may be understood that the structure shown in this embodiment of the present invention does not constitute a specific limitation on the mobile phone 200. In some other embodiments of this application, the mobile phone 200 may include more or fewer components than those shown in the figure, some components may be combined, some components may be split, or different component arrangements may be used. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a storage, a digital signal processor (digital signal processor, DSP), and a baseband processor. Different processing units may be independent devices, or may be integrated into one or more processors.

A storage may be further disposed in the processor 210, and is configured to store instructions and data. In some embodiments, the storage in the processor 210 is a cache. The storage may store instructions or data just used or cyclically used by the processor 210. If the processor 210 needs to use the instructions or the data again, the processor 210 may directly invoke the instructions or the data from the storage. This avoids repeated access and shortens waiting time of the processor 210, thereby improving system efficiency.

It may be understood that an interface connection relationship between the modules shown in this embodiment of the present invention is merely an example for description, and does not constitute a limitation on the structure of the mobile phone 200. In some other embodiments of this application, the mobile phone 200 may alternatively use an interface connection manner different from that in the foregoing embodiment, or use a combination of a plurality of interface connection manners.

A radio frequency communication function of the mobile phone 200 may be implemented by using the antenna 1, the wireless communication module 230, the modem processor, the baseband processor, and the like.

The antenna 1 is configured to: transmit and receive a radio frequency signal.

The wireless communication module 230 may provide a solution that is applied to the mobile phone 200 and that includes wireless communication such as a wireless local area network (wireless local area network, WLAN) (such as a wireless fidelity (wireless fidelity, Wi-Fi) network), Bluetooth (Bluetooth, BT), frequency modulation (frequency modulation, FM), near field communication (near field communication, NFC), UWB, and infrared (infrared, IR). The wireless communication module 230 may be one or more devices that integrate at least one communication processing module. The wireless communication module 230 receives a radio frequency signal through the antenna 1, performs frequency modulation and filtering processing on the radio frequency signal, and sends a processed signal to the processor 210. The wireless communication module 230 may further receive a to-be-sent signal from the processor 210, perform frequency modulation and amplification on the signal, and convert the signal into a radio frequency signal for radiation through the antenna 1. That is, the mobile phone 200 may receive and/or send a radio frequency signal by using the wireless communication module 230. In this embodiment of this application, the mobile phone 200 may send a radio frequency signal, so that another terminal device determines signal strength and distance information that are used to measure an orientation. Alternatively, the mobile phone 200 may receive a radio frequency signal from another terminal device, and determine, by using the processor 210 based on the received radio frequency signal, signal strength and a distance that are used to measure an orientation. In addition, the mobile phone 200 may further receive and/or send, by using the wireless communication module 230, information indicating an acoustic wave frequency band for measuring an orientation.

The display 260 is configured to display an image, a video, and the like. For example, the display 260 may be configured to display information that needs to be reminded of a user. For example, in a process of measuring an orientation, if it is detected that an interference signal on a target acoustic wave frequency band is greater than an interference signal threshold, the display 260 may display information related to strength of the interference signal on the target acoustic wave frequency band. The display 260 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone 200 may include one or N displays 260, where N is a positive integer greater than 1.

The memory 220 may be configured to store computer-executable program code. The executable program code includes instructions. The processor 210 runs the instructions stored in the memory 220, to perform various function applications and data processing of the mobile phone 200. The memory 220 may include a program storage area and a data storage area. The program storage area may store an operating system, an application needed by at least one function (for example, a voice playing function or an image playing function), and the like. The data storage area may store data (such as audio data and an address book) created during use of the mobile phone 200, and the like. In addition, the memory 220 may include a high-speed random access memory, and may further include a non-volatile memory, for example, at least one magnetic disk storage device, a flash memory device, or a universal flash storage (universal flash storage, UFS).

The mobile phone 200 may implement functions of receiving and sending an acoustic wave signal by using an audio module 240, a speaker 240A, a microphone 240B, an application processor, and the like.

The audio module 240 is configured to convert digital audio information into an analog audio signal for output, and is also configured to convert analog audio input into a digital audio signal. The audio module 240 may be further configured to: encode and decode an audio signal. In some embodiments, the audio module 240 may be disposed in the processor 210, or some functional modules of the audio module 240 are disposed in the processor 210.

The speaker 240A, also referred to as a "loudspeaker" is configured to convert an audio electrical signal into a sound signal, that is, an acoustic wave signal. That is, the speaker 240A may be configured to send an acoustic wave signal. For example, the speaker 240A may send an acoustic wave signal used to measure an orientation. For another example, the mobile phone 200 may further send, by using the speaker 240A, information indicating an acoustic wave frequency band for measuring an orientation.

The microphone 240B, also referred to as a "mike" or a "mic" is configured to convert an acoustic wave signal into an electrical signal. When an orientation is measured, the microphone 240B may receive an acoustic wave signal in an environment, for example, an acoustic wave signal from another mobile phone, a note, or the like, to convert the received acoustic wave signal into an electrical signal. For example, the microphone 240B may receive an acoustic wave signal used to measure an orientation. For another example, the mobile phone 200 may further receive, by using the microphone 240B, information indicating an acoustic wave frequency band for measuring an orientation. There may be one or more microphones 240B.

In some possible design solutions, the speaker 240A and the microphone 240B may be integrated with the audio module 240.

The touch sensor 250 is also referred to as a "touch panel". The touch sensor 250 may be disposed on the display 260, and the touch sensor 250 and the display 260 form a touchscreen, which is also referred to as a "touch screen". The touch sensor 250 is configured to detect a touch operation performed on or near the touch sensor. The touch sensor 250 may transfer the detected touch operation to the application processor, to determine a type of a touch event. The display 260 may provide a visual output related to the touch operation. In some other embodiments, the touch sensor 250 may alternatively be disposed on a surface of the mobile phone 200, and is located at a location different from that of the display 260.

An example in which the foregoing first terminal device is a tag is used. The tag may include a structure similar to that of the mobile phone. In some embodiments, the tag may include more or fewer components than those shown in the mobile phone, some components may be combined, some components may be split, or different component arrangements may be used. For example, the tag may include a processor, a memory, a wireless communication module, an audio module, a speaker, a receiver, a microphone, and the like.

The foregoing second terminal device may include a structure similar to that of the mobile phone 200. Details are not described herein again.

It should be noted that the orientation measurement method provided in embodiments of this application is applicable to the second terminal device and the first terminal device shown in FIG. 1. For a specific implementation, refer to the following method embodiments. Details are not described herein again.

It should be noted that, the solutions in embodiments of this application may be further applied to another communication system, and a corresponding name may also be replaced with a name of a corresponding function in the another communication system.

In a possible design solution, an application (application, APP) or a function, for example, an "orientation measurement" APP, used to measure an orientation, may be configured on the first terminal device. When the APP determines an orientation of the second terminal device, the first terminal device may perform the orientation measurement method provided in embodiments of this application. Alternatively, an on/off option may be set in the APP used for measuring the orientation. When the on/off option is enabled, the first terminal device may perform the orientation measurement method provided in embodiments of this application.

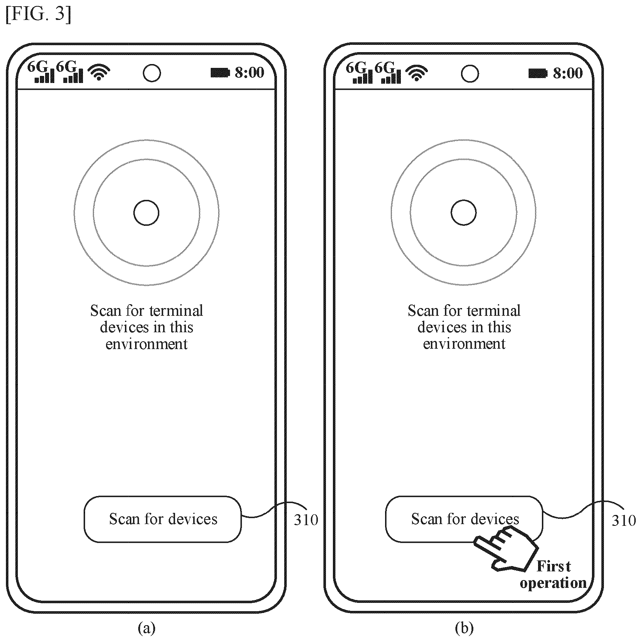

The following describes in detail, with reference to FIG. 3 to FIG. 20, the orientation measurement method provided in embodiments of this application.

For example, FIG. 3 is a schematic flowchart of an orientation measurement method according to an embodiment of this application. The orientation measurement method is applicable to orientation measurement between the first terminal device and the second terminal device shown in FIG. 1.

When an "orientation measurement" application is running, as shown (a) in FIG. 3, the "orientation measurement" APP on the first terminal device may include a "scan for devices" option 310. As shown in (b) in FIG. 3, the first terminal device may receive an operation, for example, a first operation, performed by a user on the "scan for devices" option 310. The first operation may be any operation such as a tap operation, a touch and hold operation, or a double-tap operation performed by the user on the "scan for devices" option 310.

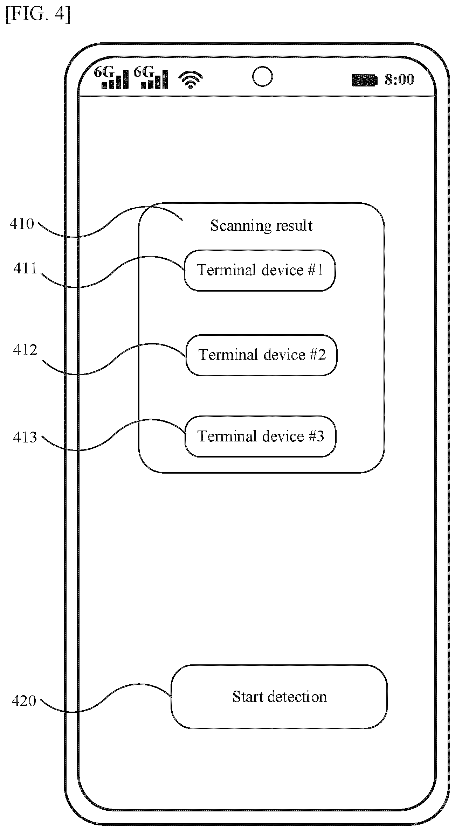

In response to the first operation, the first terminal device may start to detect another terminal device around the first terminal device, and display a "scanning result" tab 410 shown in FIG. 4. The "scanning result" tab 410 includes an option corresponding to each detected terminal device. For example, if the first terminal device detects that there are a terminal device #1 to a terminal device #3 around the first terminal device, the "scanning result" tab 410 includes a "terminal device #1" option 411, a "terminal device #2" option 412, and a "terminal device #3" option 413. In addition, the first terminal device may further display a "start detection" option 420.

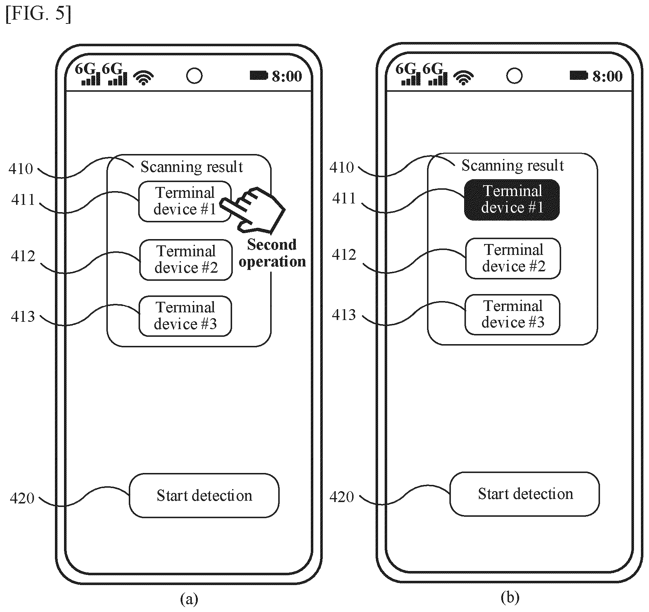

Then, as shown in (a) in FIG. 5, the first terminal device may receive an operation, for example, a second operation, performed by the user on the option corresponding to any terminal device on the "scanning result" tab 410. The second operation may be any operation such as a tap operation, a touch and hold operation, or a double-tap operation performed by the user on any option on the "scanning result" tab 410. In response to the second operation, the first terminal device may determine the second terminal device, and display an interface shown in (b) in FIG. 5. For example, the second operation may be the tap operation on the "terminal device #1" option 411. In this case, the second terminal device is the terminal device #1.

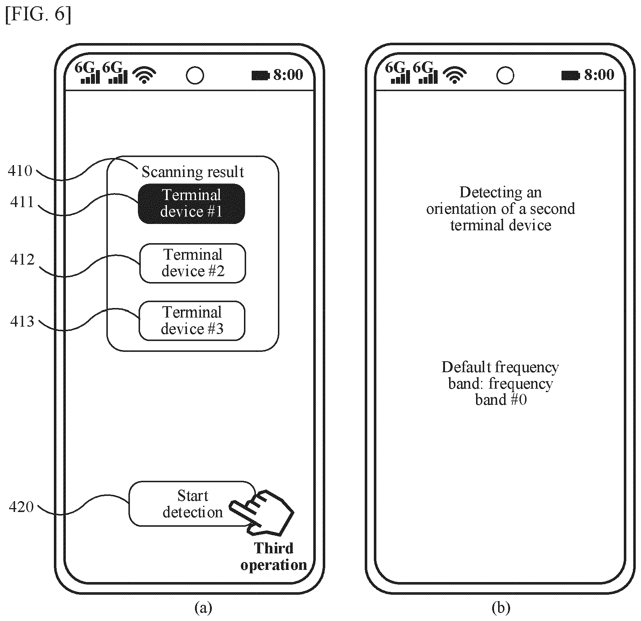

In addition, as shown in (a) in FIG. 6, the first terminal device may further receive a third operation performed by the user on the "start detection" tab 420. The third operation may be any operation such as a tap operation, a touch and hold operation, or a double-tap operation performed by the user on the "start detection" option 420. In response to the third operation, the first terminal device may start to detect an orientation of the second terminal device, for example, the terminal device #1, and display a interface shown in FIG. 6 (b). In some possible design solutions, the interface shown in (b) in FIG. 6 may further display a default frequency band, for example, a default frequency band #0, used to detect the orientation of the second terminal device.

It may be understood that scenarios shown in FIG. 4 to FIG. 6 are used as examples. In actual implementation, there may be another scenario. Details are not described herein again.

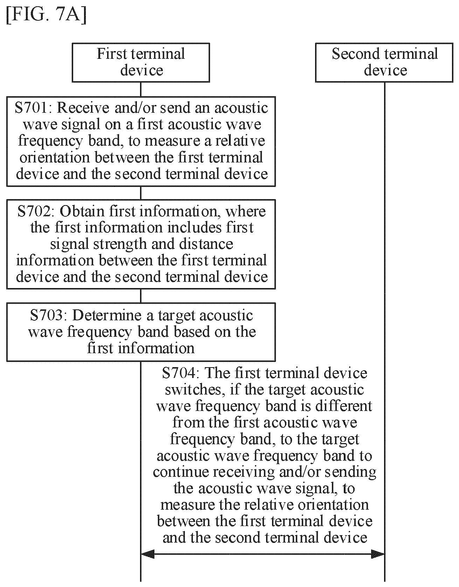

For a specific implementation of measuring the orientation of the second terminal device, refer to the following orientation measurement method provided in FIG. 7A.

FIG. 7A is a schematic flowchart 1 of an orientation measurement method according to an embodiment of this application. As shown in FIG. 7A, the orientation measurement method includes S701 to S704. The following provides descriptions with reference to specific steps.

S701: A first terminal device receives and/or sends an acoustic wave signal on a first acoustic wave frequency band, to measure a relative orientation between the first terminal device and a second terminal device.

If the first terminal device has started to measure the relative orientation between the first terminal device and the second terminal device, the orientation measurement method provided in this embodiment of this application may include step S701.

If the first terminal device has not started to measure the relative orientation between the first terminal device and the second terminal device, the orientation measurement method provided in this embodiment of this application may not include S701.

S702: The first terminal device obtains first information.

The first information includes first signal strength and distance information between the second terminal device and the first terminal device.

For example, the distance information indicates a first distance between the first terminal device and the second terminal device, or indicates that the distance between the second terminal device and the first terminal device is not detected.

For example, the first signal strength may be signal strength of a first signal that is sent by the second terminal device and that is received by the first terminal device. Alternatively, the first signal strength may be strength of a signal received by the first terminal device from the second terminal device, and the strength of the signal from the second terminal device is obtained by the second terminal device through measurement based on a second signal from the first terminal device. The first signal strength may be a received signal strength indication (received signal strength indication, RSSI), a signal to interference plus noise ratio (signal to interference plus noise ratio, SINR), or the like.

The first signal may include a radio frequency signal and/or an acoustic wave signal. Similarly, the second signal may include a radio frequency signal and/or an acoustic wave signal. The radio frequency signal may include one or more of the following: a Bluetooth signal or a Wi-Fi signal. In other words, the first signal may be a radio frequency signal, the first signal may be an acoustic wave signal, or the first signal may be a mixed signal of the radio frequency signal and the acoustic wave signal. The second signal may be a radio frequency signal, the second signal may be an acoustic wave signal, or the second signal may be a mixed signal of the radio frequency signal and the acoustic wave signal.

The following describes the first signal with reference to different cases.

Case 1: In all scenarios, the first signal is a radio frequency signal. In this case, the first signal strength is signal strength of the radio frequency signal that is sent by the second terminal device and that is received by the first terminal device.

Case 2: In all scenarios, the first signal is an acoustic wave signal. In this case, the first signal strength is signal strength of the acoustic wave signal that is sent by the second terminal device and that is received by the first terminal device.

For example, when a radio frequency connection is established between the first terminal device and the second terminal device, but an acoustic wave used to measure an orientation has not started to be sent, the first signal may be an acoustic wave signal on a first preset frequency band. For example, a frequency of the first preset frequency band may be lower than a first frequency threshold, for example, 10 kHz. In this way, reliability can be improved. After an acoustic wave signal used to measure an orientation starts to be transmitted between the second terminal device and the first terminal device, the first signal may be the acoustic wave signal used to measure the orientation.

Case 3: If a radio frequency connection, for example, a Bluetooth connection, is established between the first terminal device and the second terminal device, and an acoustic wave used to measure an orientation has not started to be sent between the first terminal device and the second terminal device, the first signal may be a radio frequency signal. In this case, the first signal strength is signal strength of the radio frequency signal that is sent by the second terminal device and that is received by the first terminal device.

Case 4: If a radio frequency connection, for example, a Bluetooth connection, is established between the first terminal device and the second terminal device, and an acoustic wave signal used to measure an orientation has started to be sent between the first terminal device and the second terminal device, that is, the first terminal device has started to measure the relative orientation between the first terminal device and the second terminal device, the first signal may be an acoustic wave signal. In this case, the first signal strength is signal strength of the acoustic wave signal that is sent by the second terminal device and that is received by the first terminal device.

Case 5: If a radio frequency connection, for example, a Bluetooth connection, is established between the first terminal device and the second terminal device, and the first terminal device and the second terminal device may send acoustic wave signals to each other, the first signal may include both a radio frequency signal and an acoustic wave signal. In this case, the first signal strength includes signal strength of the radio frequency signal that is sent by the second terminal device and that is received by the first terminal device, and signal strength of the acoustic wave signal that is sent by the second terminal device and that is received by the first terminal device.

For an implementation principle of the acoustic wave signal included in the first signal, refer to related descriptions in Case 2. Details are not described herein again.

An implementation principle of the second signal is similar to an implementation principle of the first signal. For a specific implementation, refer to descriptions related to the first signal in Case 1 to Case 5. In addition, an implementation principle of the second signal strength is similar to that in Case 1 to Case 5. Details are not described herein again.

The following describes S702 in detail.

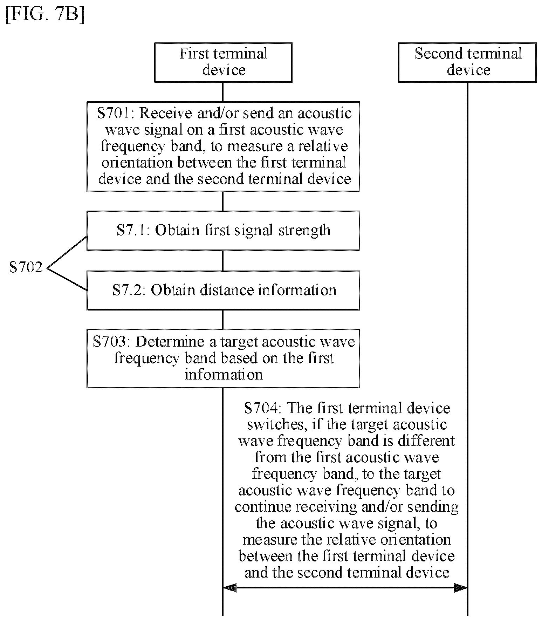

As shown in FIG. 7B, S702 may include S7.1 and/or S7.2.

S7.1: The first terminal device obtains first signal strength.

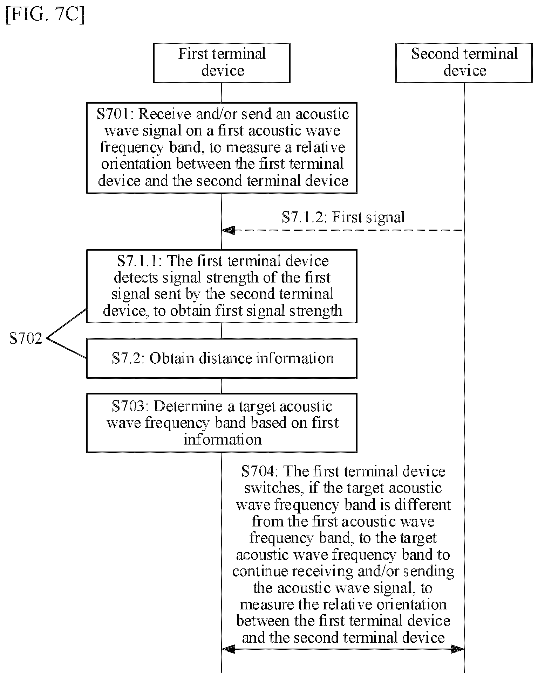

Optionally, as shown in FIG. 7C, if the first signal strength may be the signal strength of the first signal that is sent by the second terminal device and that is received by the first terminal device, S7.1 may include S7.1.1.

S7.1.1: The first terminal device detects the signal strength of the first signal sent by the second terminal device, to obtain the first signal strength.

In this case, before S7.1.1, the orientation measurement method provided in FIG. 7C may further include S7.1.2.

S7.1.2: The second terminal device sends a first signal. Correspondingly, the first terminal device receives the first signal from the second terminal device.

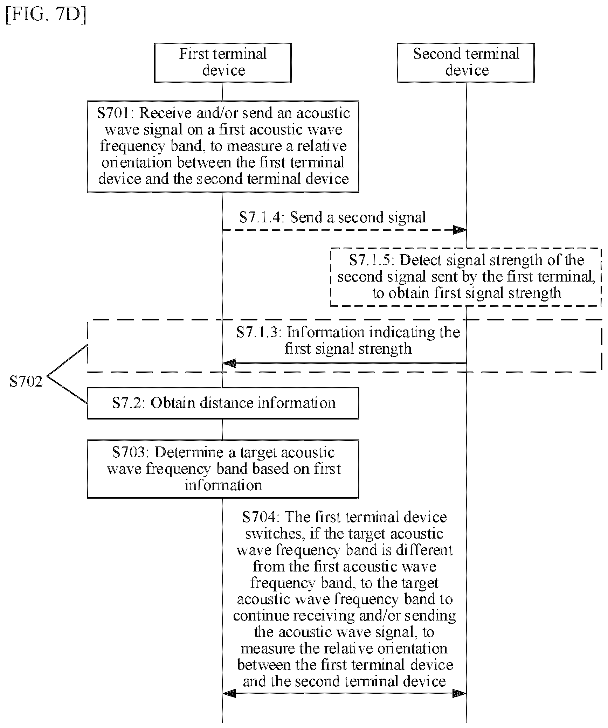

Alternatively, optionally, as shown in FIG. 7D, if the first signal strength is the signal strength of the first signal that is sent by the second terminal device and that is received by the first terminal device, S7.1 may include S7.1.3.

S7.1.3: The first terminal device receives, from the second terminal device, information indicating the first signal strength, to obtain the first signal strength.

In this case, before S7.1.3, the method provided in FIG. 7D may further include S7.1.4 and S7.1.5.

S7.1.4: The first terminal device sends a second signal to the second terminal device.

S7.1.5: The second terminal device detects signal strength of the second signal sent by the first terminal device, to obtain first signal strength.

S7.2: The first terminal device obtains distance information.

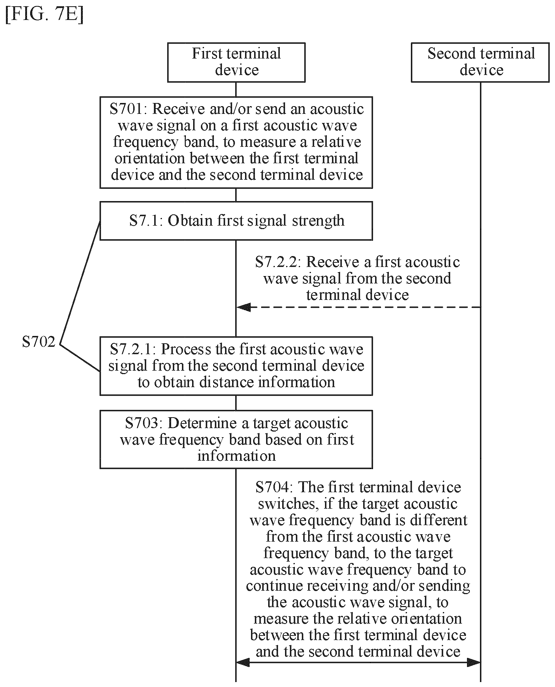

As shown in FIG. 7E, in a possible design solution, S7.2 may include S7.2.1.

S7.2.1: The first terminal device processes a first acoustic wave signal from the second terminal device, to obtain distance information.

For an implementation principle of the distance information, refer to a principle of determining a distance based on an acoustic wave and/or a radio frequency signal in a conventional technology. Details are not described herein.

In this case, before S7.2.1, the method provided in FIG. 7E may further include S7.2.2.

S7.2.2: The second terminal device may send a first acoustic wave signal. Correspondingly, the first terminal device may receive the first acoustic wave signal from the second terminal device. In this embodiment of this application, a frequency band of the first acoustic wave signal may be a second preset frequency band, or may be a frequency band of an acoustic wave currently used by the second terminal device to operate, or another frequency band. This is not limited herein.

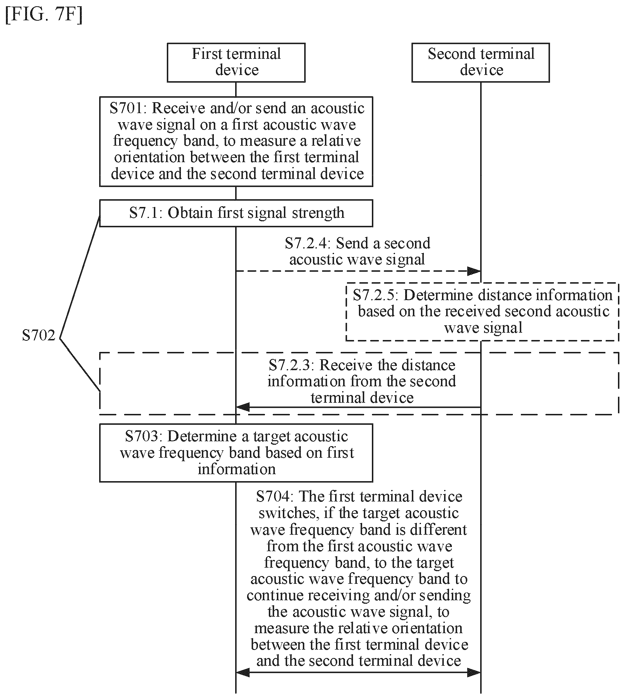

As shown in FIG. 7F, in another possible design solution, the distance information may be from the second terminal device. In this case, S7.2 may include S7.2.3.

S7.2.3: The first terminal device may receive the distance information from the second terminal device.

That is, the second terminal device may send the distance information to the first terminal device.

In this case, before S7.2.3, the method provided in FIG. 7F may further include S7.2.4 and S7.2.5.

S7.2.4: The first terminal device sends a second acoustic wave signal to the second terminal device. Correspondingly, the second terminal device receives the second acoustic wave signal from the first terminal device.

For an implementation principle of the second acoustic wave signal, refer to an implementation principle of the first acoustic wave signal. Details are not described herein again.

S7.2.5: The second terminal device determines distance information based on the received second acoustic wave signal.

A principle of determining the distance information in S7.2.1 is similar to that in S7.2.5. The distance between the first terminal device and the second terminal device may be first calculated. For a specific implementation principle, refer to a principle of measuring a distance in an existing ranging technology. The first distance may be implemented based on the existing ranging technology.

For example, the first distance may be determined based on a time of flight (time of flight, ToF) difference. For example, a time of flight difference t (namely, time consumed for flight) of a signal transmitted between the second terminal device and the first terminal device may be measured, and is then multiplied by a speed v of an acoustic wave, to calculate a flight distance L=v *t. It may be understood that determining the first distance based on the time of flight difference is merely used as an example. During specific implementation, the first distance may alternatively be determined by using another existing ranging technology. Details are not described herein.

Signal strength of a signal is related to a propagation distance of the signal. A larger propagation distance indicates weaker signal strength, and a smaller propagation distance indicates stronger signal strength. When an acoustic wave signal penetrates an obstruction, signal attenuation is large and signal strength is weak. When an acoustic wave signal does not penetrate an obstruction, signal attenuation is small and signal strength is strong. That is, both the first distance and the first signal strength may indicate a distance status between the first terminal device and the second terminal device. In addition, when the first signal strength is signal strength obtained based on a radio frequency signal, because attenuation of the first signal strength is almost not affected by an obstruction, a status of the obstruction and the distance between the first terminal device and the second terminal device may be determined based on a combination of the distance information and the first signal strength. If the distance between the first terminal device and the second terminal device is not detected, or the first distance is large, when the first signal strength is strong, it indicates that the distance between the first terminal device and the second terminal device is small. If the first distance is small, or the first signal strength is weak, it indicates that the distance between the first terminal device and the second terminal device is large. Therefore, in this embodiment of this application, a target acoustic wave frequency band may be determined based on the first signal strength or the first information, for example, the first signal strength and the distance information. The following provides descriptions with reference to S703.

That the distance between the first terminal device and the second terminal device is not detected may be that the first terminal device does not obtain the distance between the first terminal device and the second terminal device, or does not detect an appropriate distance value. For example, if a detected distance value is a negative value, it is considered that the result is inappropriate and needs to be discarded. For another example, assuming that an effective distance detected for a current distance does not exceed 80 m, but an actually detected distance value is 200 m, the result is inappropriate and needs to be discarded. The foregoing case is usually caused by large burst delay fluctuation occurring in bottom-layer signal processing.

S703: The first terminal device determines a target acoustic wave frequency band based on the first information.

The target acoustic wave frequency band is one of at least two candidate acoustic wave frequency bands, and frequencies of the at least two candidate acoustic wave frequency bands are different from each other.

In addition, in an environment in which the first terminal device and the second terminal device are located, there may be another interference signal that may cause interference to the acoustic wave signal propagated between the first terminal device and the second terminal device. Signal strength of the interference signal may indicate a degree of impact of the interference signal on the acoustic wave signal propagated between the first terminal device and the second terminal device. An interference signal with stronger signal strength causes greater interference to another acoustic wave signal on a same frequency band as the interference signal, and an interference signal with weaker signal strength causes less interference to an acoustic wave signal on a same frequency band as the interference signal. Therefore, optionally, the first information may further include signal strength of an interference signal on each of the at least two candidate acoustic wave frequency bands.

In a possible design solution, the at least two candidate acoustic wave frequency bands may include two candidate acoustic wave frequency bands.

For example, the at least two candidate acoustic wave frequency bands may include a frequency band #0 and a frequency band #1. For example, a range of a frequency fre of the frequency band #0 may be 6 kHz≤fre<10 kHz, and a range of a frequency fre of the frequency band #1 may be 14 kHz≤fre<18 kHz. In this case, the frequency band #0 may also be referred to as a low frequency band, and the frequency band #1 may also be referred to as a high frequency band.

In another possible design solution, the at least two candidate acoustic wave frequency bands may include three candidate acoustic wave frequency bands.

For example, the at least two candidate acoustic wave frequency bands may include a frequency band #2 to a frequency band #4. For example, a range of a frequency fre of the frequency band #2 may be 6 kHz≤fre<10 kHz, and a range of a frequency fre of the frequency band #3 may be 14 kHz≤fre<18 kHz, a range of a frequency fre of the frequency band #4 may be 18 kHz≤fre<22 kHz. In this case, the frequency band #2 may also be referred to as a low frequency band, the frequency band #3 may also be referred to as an intermediate frequency band, and the frequency band #4 may also be referred to as a high frequency band.

It may be understood that the at least two candidate acoustic wave frequency bands may further include more than three candidate acoustic wave frequency bands, and details are not described herein.

Optionally, the at least two candidate acoustic wave frequency bands may be preconfigured in the second terminal device and the first terminal device.

It should be noted that the high frequency band, the intermediate frequency band, and the low frequency band are relative concepts, and may be determined based on center frequency points of the frequency bands. The center frequency point of the high frequency band is higher than the center frequency point of the intermediate frequency band and the center frequency point of the low frequency band, and the center frequency point of the intermediate frequency band is higher than the center frequency point of the low frequency band.

In addition, in the at least two candidate acoustic wave frequency bands, bandwidths of different candidate acoustic wave frequency bands may be the same or may be different.

For ease of understanding, the following describes S703 with reference to different scenarios.

Scenario 1: The target acoustic wave frequency band is determined from a mapping relationship.

Because an effective distance for measuring an orientation on an acoustic wave frequency band is negatively correlated with a frequency of the acoustic wave frequency band, auditory experience on the acoustic wave frequency band is positively correlated with the frequency of the acoustic wave frequency band. That is, a higher acoustic wave frequency indicates a smaller effective distance for measuring an orientation and better auditory experience; and a lower acoustic wave frequency indicates a larger effective distance for measuring an orientation and poorer auditory experience. Therefore, for different first distances and different first signal strength, different acoustic wave frequency bands may be correspondingly used to measure the orientation.

**In** a possible design solution, that the first terminal device determines the target acoustic wave frequency band based on the first information includes: if the first signal strength and the distance information meet a first condition, determining a first candidate acoustic wave frequency band corresponding to the first condition as the target acoustic wave frequency band; or if the first signal strength and the distance information meet a second condition, determining a second candidate acoustic wave frequency band corresponding to the second condition as the target acoustic wave frequency band. The first condition includes: The first distance is greater than a first distance threshold, and/or the first signal strength is less than or equal to a first strength threshold. The second condition includes: The first distance is less than or equal to a second distance threshold, and the first signal strength is greater than a second strength threshold; or the distance between the first terminal device and the second terminal device is not detected, and the first signal strength is greater than a third strength threshold, where the third strength threshold is greater than the second strength threshold. A frequency of the first candidate acoustic wave frequency band is lower than a frequency of the second candidate acoustic wave frequency band.

Both the first candidate acoustic wave frequency band corresponding to the first condition and the second candidate acoustic wave frequency band corresponding to the second condition may be determined from a first mapping relationship. The first mapping relationship includes a correspondence between a combination of the first signal strength and the distance information and the acoustic wave frequency band in the at least two candidate acoustic wave frequency bands in different first acoustic wave frequency bands.

For ease of understanding, the following describes the first mapping relationship with reference to an example in which the at least two candidate acoustic wave frequency bands include a high frequency acoustic wave frequency band and a low frequency acoustic wave frequency band. It is assumed that the first distance detected by the first terminal device is D, and the first signal strength is RSSI. If the first acoustic wave frequency band is a high frequency acoustic wave frequency band, the first distance threshold is thr_{D}, and both the first strength threshold and the second strength threshold are thf_{RSSI1}. If the first acoustic wave frequency band is a low frequency acoustic wave frequency band, the second distance threshold is thr_{D}, and both the first strength threshold and the second strength threshold are thr_{RSSI2}. The third strength threshold is thf_{RSSI3}. In this case, the first mapping relationship is shown in the following Table 1.

**Table 1**

| First acoustic wave frequency band | Signal strength range and/or distance range | Target acoustic wave frequency band |
|---|---|---|
| High frequency acoustic wave frequency band | D>thr_{D} and/or RSSI≤thr_{RSSI1} | Low frequency acoustic wave frequency band |
| | D≤thr_{D} and RSSI>thr_{RSSI1} | High frequency acoustic wave frequency band |
| | The distance fails to be obtained through measurement and RSSI>thr_{RSSI3} | High frequency acoustic wave frequency band |
| Low frequency acoustic wave frequency band | D>thr_{D} and/or RSSI≤thr_{RSSI2} | Low frequency acoustic wave frequency band |
| | D≤thr_{D} and RSSI>thr_{RSSI2} | High frequency acoustic wave frequency band |
| | The distance fails to be obtained through measurement and RSSI>thr_{RSSI3} | High frequency acoustic wave frequency band |

If the first acoustic wave frequency band is the high frequency acoustic wave frequency band, the first condition includes: D>thr_{D} and/or RSSI≤thr_{RSSI1}. The second condition includes: D≤thr_{D}, and RSSI>thr_{RSSI1}; or the distance fails to be obtained through measurement and RSSI>thr_{RSSI3}. If the first acoustic wave frequency band is the low frequency acoustic wave frequency band, the first condition includes: D>thr_{D} and/or RSSI≤thr_{RSSI2}. The second condition includes: D≤thr_{D}, and RSSI>thr_{RSSI2}; or the distance fails to be obtained through measurement and RSSI>thr_{RSSI3}. It may be understood that, that the distance fails to be obtained through measurement means that the distance between the first terminal device and the second terminal device fails to be obtained through measurement.

It may be understood that the high frequency band and the low frequency band are relative concepts, and may be determined based on center frequency points of the frequency bands. The center frequency point of the high frequency band is higher than the center frequency point of the low frequency band.

In a possible design solution, that the first terminal device determines the target acoustic wave frequency band based on the first information includes: if the first signal strength and the distance information meet a first condition, determining a first candidate acoustic wave frequency band corresponding to the first condition as the target acoustic wave frequency band; if the first signal strength and the distance information meet a second condition, determining a second candidate acoustic wave frequency band corresponding to the second condition as the target acoustic wave frequency band; or if the first signal strength and the distance information meet a third condition, determining a third candidate acoustic wave frequency band corresponding to the third condition as the target acoustic wave frequency band. The first condition includes: The first distance is greater than a first distance threshold, and/or the first signal strength is less than or equal to a first strength threshold. The second condition includes: The first distance is less than or equal to a second distance threshold, and the first signal strength is greater than a second strength threshold; or the distance between the first terminal device and the second terminal device is not detected, and the first signal strength is greater than a third strength threshold, where the third strength threshold is greater than the second strength threshold. The third condition includes: The first distance is greater than the second distance threshold and less than or equal to the first distance threshold, and/or the first signal strength is greater than a fourth strength threshold and less than a fifth strength threshold, where the fourth strength threshold is less than the second strength threshold, and the fifth strength threshold is greater than the first strength threshold. A frequency of the first candidate acoustic wave frequency band is lower than a frequency of the third candidate acoustic wave frequency band, and the frequency of the third candidate acoustic wave frequency band is lower than a frequency of the second candidate acoustic wave frequency band. The fourth strength threshold may be determined based on a candidate acoustic wave frequency band whose frequency is lower than the frequency of the first acoustic wave frequency band and that is contiguous with the first acoustic wave frequency band. The fifth strength threshold may be determined based on the first acoustic wave frequency band. For example, the fifth strength threshold may be equal to the third strength threshold.

Similar to a case in which the at least two candidate acoustic wave frequency bands include the two candidate acoustic wave frequency bands, when the at least two candidate acoustic wave frequency bands include the three candidate acoustic wave frequency bands, the first candidate acoustic wave frequency band corresponding to the first condition, the second candidate acoustic wave frequency band corresponding to the second condition, and the third candidate acoustic wave frequency band corresponding to the third condition may all be determined from a second mapping relationship. For an implementation principle of the second mapping relationship, refer to an implementation principle of the first mapping relationship. Details are not described herein again.

In this embodiment of this application, the first strength threshold, the second strength threshold, the third strength threshold, the fourth strength threshold, or the fifth strength threshold is associated with a frequency of the first acoustic wave frequency band. That is, when candidate acoustic wave frequency bands with different frequencies are the first acoustic wave frequency band, first strength thresholds, second strength thresholds, third strength thresholds, fourth strength thresholds, or fifth strength thresholds are different. In other words, if the first acoustic wave frequency band changes, the first strength threshold, the second strength threshold, the third strength threshold, the fourth strength threshold, or the fifth strength threshold also changes correspondingly based on the first acoustic wave frequency band.

It may be understood that, for a first acoustic wave frequency band, the first strength threshold and the second strength threshold may be the same or may be different. In some possible design solutions, the fourth strength threshold may alternatively be equal to the second strength threshold, and the fifth strength threshold may alternatively be equal to the first strength threshold. In this embodiment of this application, implementation principles of the first strength threshold to the fifth strength threshold in different scenarios are similar, and details are not described herein.

### Scenario 2:

When the first information includes the first signal strength and the distance information, S703 may include: The first terminal device determines the target acoustic wave frequency band based on the first signal strength and the distance information.

The following describes in detail how to determine the target acoustic wave frequency band.

Scenario 2.1: When the distance between the first terminal device and the second terminal device becomes larger, or the first signal strength between the first terminal device and the second terminal device decreases as the distance between the first terminal device and the second terminal device increases, attenuation of the acoustic wave signal increases, an effective distance for measuring an orientation on a same acoustic wave frequency band decreases. If the distance between the first terminal device and the second terminal device increases to a specific degree, or obstructing of the acoustic wave signal by the obstruction increases to a specific degree, measuring the relative orientation between the first terminal device and the second terminal device by using the acoustic wave signal on the first acoustic wave frequency band fails. Because attenuation of an acoustic wave signal with a lower frequency is smaller, to ensure an effective distance for measuring an orientation, when the attenuation of the acoustic wave signal increases, switching to an acoustic wave frequency band whose frequency is lower than the frequency of the first acoustic wave frequency band may be performed, to measure the orientation.

Based on this, if the first signal strength and the distance information meet the first condition, and candidate acoustic wave frequency bands meeting a fourth condition exist in the at least two candidate acoustic wave frequency bands, one of the candidate acoustic wave frequency bands meeting the fourth condition in the at least two candidate acoustic wave frequency bands is determined as the target acoustic wave frequency band.

For example, the first condition includes: The first distance is greater than a first distance threshold, and/or the first signal strength is less than or equal to a first strength threshold.

The first distance threshold may be related to a largest effective distance obtained when the first acoustic wave frequency band is used to measure the orientation. For example, the first distance threshold may be the largest effective distance obtained when the first acoustic wave frequency band is used to measure the orientation.

The fourth condition includes: A frequency of the candidate acoustic wave frequency band is lower than a frequency of the first acoustic wave frequency band.

In this solution, if the first signal strength and the distance information meet the first condition, to be specific, the first distance is greater than the first distance threshold, and/or the first signal strength is less than or equal to the first strength threshold, it may indicate that the attenuation of the acoustic wave signal between the first terminal device and the second terminal device causes a failure in measuring the orientation by using the acoustic wave signal on the first acoustic wave frequency band. Therefore, to consider both the effective distance for measuring the orientation and auditory experience, a candidate acoustic wave frequency band with a lower frequency and a smaller attenuation degree than the first acoustic wave frequency band may be determined as the target acoustic wave frequency band.

A higher frequency of an acoustic wave signal indicates better auditory experience. Therefore, to better consider the auditory experience and the effective distance for measuring the orientation, optionally, the target acoustic wave frequency band may be a candidate acoustic wave frequency band with a highest frequency in the candidate acoustic wave frequency bands meeting the fourth condition.

Optionally, if two candidate acoustic wave frequency bands whose frequencies are lower than the frequency of the first acoustic wave frequency band exist in the at least two candidate acoustic wave frequency bands, and the first condition includes: The first distance is greater than the first distance threshold, the first condition may further include, to better consider the auditory experience and the effective distance for measuring the orientation that the first distance is less than or equal to a third distance threshold.

The third distance threshold is greater than the first distance threshold. The third distance threshold is determined based on a candidate acoustic wave frequency band with a higher frequency in the two candidate acoustic wave frequency bands whose frequencies are lower than the frequency of the first acoustic wave frequency band.

For example, the third distance threshold may be determined based on an effective distance for measuring the orientation on the candidate acoustic wave frequency band with the higher frequency in the two candidate acoustic wave frequency bands whose frequencies are lower than the frequency of the first acoustic wave frequency band.

Further, the two candidate acoustic wave frequency bands whose frequencies are lower than the frequency of the first acoustic wave frequency band and the first acoustic wave frequency band may be contiguous.

The third distance threshold is related to a candidate acoustic wave frequency band far away from the first acoustic wave frequency band in the two contiguous candidate acoustic wave frequency bands whose frequencies are lower than the frequency of the first acoustic wave frequency band. That the two acoustic wave frequency bands are contiguous may mean that there is no other acoustic wave frequency band between the two acoustic wave frequency bands. A frequency of a frequency band may be determined based on one or more of the following of the frequency band: a start frequency, a center frequency, or an end frequency. The center frequency is used as an example. That the two acoustic wave frequency bands are contiguous may mean that there is no center frequency of another acoustic wave frequency band between center frequencies of the two acoustic wave frequency bands.

In this case, the third distance threshold is determined based on an effective distance for measuring the orientation on a candidate acoustic wave frequency band that is contiguous with the first acoustic wave frequency band and whose frequency is lower than the frequency of the first acoustic wave frequency band.

For example, in candidate acoustic wave frequency bands whose frequencies are lower than the frequency of the first acoustic wave frequency band in the at least two candidate acoustic wave frequency bands, candidate acoustic wave frequency bands whose frequencies are in descending order are sequentially a frequency band #1 and a frequency band #0. In this case, the third distance threshold is related to an effective distance obtained when the frequency band #1 is used to measure an orientation. For example, if the effective distance obtained when the frequency band #1 is used to measure the orientation is 20 meters, the third distance threshold is 20 meters.

The first acoustic wave frequency band is a frequency band currently used for measuring the orientation, and the first acoustic wave frequency band is one of the at least two candidate acoustic wave frequency bands. In the at least two candidate acoustic wave frequency bands, a candidate acoustic wave frequency band other than the first acoustic wave frequency band may also be referred to as a second acoustic wave frequency band.

It can be learned with reference to the first condition and the fourth condition that, when the distance between the first terminal device and the second terminal device increases, if the first distance is greater than the first distance threshold, and/or the first signal strength is less than or equal to the first strength threshold, it indicates that the first distance exceeds the effective distance for measuring the orientation by using the acoustic wave signal on the first acoustic wave frequency band. Therefore, switching to an acoustic wave frequency band with a larger effective distance for measuring the orientation may be performed, in other words, in the at least two candidate acoustic wave frequency bands, one of the candidate acoustic wave frequency bands whose frequencies are lower than the frequency of the first acoustic wave frequency band is determined as the target acoustic wave frequency band. For example, the candidate acoustic wave frequency band with the highest frequency in the candidate acoustic wave frequency bands whose frequencies are lower than the frequency of the first acoustic wave frequency band is determined as the target acoustic wave frequency band.

It may be understood that, when the measurement of the orientation does not start, the frequency band currently used for measuring the orientation may be a preset frequency band used for measuring the orientation. Alternatively, when the measurement of the orientation does not start, the frequency band currently used for measuring the orientation may be a frequency band that is determined based on a second distance and that is used for measuring the orientation. In other words, the first acoustic wave frequency band is determined based on the second distance between the first terminal device and the second terminal device. The second distance is a distance obtained based on a radio frequency signal between the first terminal device and the second terminal device. The second distance may be the foregoing first distance. For example, the distance status between the first terminal device and the second terminal device may be determined based on the signal strength of the radio frequency signal between the first terminal device and the second terminal device, where stronger signal strength of the radio frequency signal indicates a smaller distance between the first terminal device and the second terminal device, and weaker signal strength of the radio frequency signal indicates a larger distance between the first terminal device and the second terminal device. When the measurement of the orientation has started, the frequency band currently used for measuring the orientation is a frequency band currently actually used for measuring the orientation.

When the frequency band currently used for measuring the orientation is the frequency band that is determined based on the second distance and that is used for measuring the orientation, the method provided in this embodiment of this application may further include: The second terminal device sends the radio frequency signal. Correspondingly, the first terminal device receives the radio frequency signal sent by the second terminal device. The first terminal device determines the second distance based on the signal strength of the received radio frequency signal.

Alternatively, the first terminal device sends the radio frequency signal. Correspondingly, the second terminal device receives the radio frequency signal sent by the first terminal device. The second terminal device determines the second distance based on the signal strength of the received radio frequency signal. The second terminal device sends, to the first terminal device, information including the second distance. Correspondingly, the first terminal device receives, from the second terminal device, the information including the second distance.

For a principle of determining the second distance by the first terminal device or the second terminal device, refer to an implementation principle in the conventional technology. Details are not described herein.

Scenario 2.2: When the distance between the first terminal device and the second terminal device becomes smaller, or the first signal strength between the first terminal device and the second terminal device increases as the distance between the first terminal device and the second terminal device decreases, attenuation of the acoustic wave signal decreases. If the distance between the first terminal device and the second terminal device decreases to an effective distance for measuring the orientation on another frequency band, the relative orientation between the first terminal device and the second terminal device may be measured by using an acoustic wave signal whose frequency is higher than the frequency of the first acoustic wave frequency band. Therefore, whether to switch the frequency may be determined based on the first signal strength and the distance information. An acoustic wave signal with a higher frequency indicates better auditory experience. Therefore, to better ensure auditory experience, when the first distance decreases, switching to the acoustic wave frequency band whose frequency is higher than the frequency of the first acoustic wave frequency band may be performed, to measure the orientation.

Based on this, if the first signal strength and the distance information meet a second condition, and candidate acoustic wave frequency bands meeting a fifth condition exist in the at least two candidate acoustic wave frequency bands, one of the candidate acoustic wave frequency bands meeting the fifth condition in the at least two candidate acoustic wave frequency bands is determined as the target acoustic wave frequency band.

For example, the second condition includes: The first distance is less than or equal to a second distance threshold, and the first signal strength is greater than a second strength threshold; or the distance between the first terminal device and the second terminal device is not detected, and the first signal strength is greater than a third strength threshold.

The fifth condition includes: A frequency of the candidate acoustic wave frequency band is higher than a frequency of the first acoustic wave frequency band.

In this solution, if the first signal strength and the distance information meet the fifth condition, to be specific, the first distance is less than or equal to the second distance threshold and the first signal strength is greater than the second strength threshold, or the distance between the first terminal device and the second terminal device is not detected and the first signal strength is greater than the third strength threshold, it may indicate that the distance between the first terminal device and the second terminal device decreases. Therefore, to consider the auditory experience and the effective distance for measuring the orientation, a candidate acoustic wave frequency band with a frequency higher than the frequency of the first acoustic wave frequency band and better auditory experience may be determined as the target acoustic wave frequency band.

A lower frequency of an acoustic wave signal indicates smaller attenuation. Therefore, to better ensure the effective distance for measuring the orientation, optionally, the target acoustic wave frequency band may be a candidate acoustic wave frequency band with a lowest frequency in the candidate acoustic wave frequency bands meeting the fifth condition in the at least two candidate acoustic wave frequency bands. Based on this, in the at least two candidate acoustic wave frequency bands, if there are two contiguous candidate acoustic wave frequency bands whose frequencies are higher than the frequency of the first acoustic wave frequency band, and one candidate acoustic wave frequency band in the two consecutive candidate acoustic wave frequency bands is contiguous with the first acoustic wave frequency band, to better consider the effective distance for measuring the orientation, in the second condition, when the first distance is less than or equal to the second distance threshold, the second condition may further include: The first distance is greater than a fourth distance threshold.

The fourth distance threshold is determined based on a candidate acoustic wave frequency band with a lower frequency in the two candidate acoustic wave frequency bands whose frequencies are higher than the frequency of the first acoustic wave frequency band.

The fourth distance threshold is less than the second distance threshold.

It can be learned with reference to the second condition and the fifth condition that, when the first distance between the first terminal device and the second terminal device is less than or equal to the second distance threshold, and the first signal strength is greater than the second strength threshold; or when the distance between the first terminal device and the second terminal device is not detected, and the first signal strength is greater than the third strength threshold, one of the at least two candidate acoustic wave frequency bands whose frequencies are higher than the frequency of the first acoustic wave frequency band may be determined as the target acoustic wave frequency band.

Scenario 2.3: When the distance between the first terminal device and the second terminal device increases and/or the signal strength decreases, and the orientation can still be measured through the first acoustic wave frequency band, and/or when the first signal strength between the first terminal device and the second terminal device increases as the distance between the first terminal device and the second terminal device decreases, attenuation of the acoustic wave signal decreases, and the distance between the first terminal device and the second terminal device has not decreased to be within an effective distance in which the orientation may be measured by using another candidate acoustic wave frequency band whose frequency is higher than the frequency of the first acoustic wave frequency band, the relative orientation between the first terminal device and the second terminal device is still measured by using the acoustic wave signal on the first acoustic wave frequency band, that is, no frequency band switching is performed.

Based on this, S703 may include: if the first acoustic wave frequency band is an acoustic wave frequency band with a lowest frequency in the at least two candidate acoustic wave frequency bands, and the first signal strength and the distance information meet a first condition, determining the first acoustic wave frequency band as the target frequency band. The first condition includes: The first distance is greater than a first distance threshold, and the first signal strength is less than or equal to a first strength threshold.

If the first acoustic wave frequency band is an acoustic wave frequency band with a highest frequency in the at least two candidate acoustic wave frequency bands, and the first signal strength and the distance information meet a second condition, the first acoustic wave frequency band is determined as the target frequency band. The second condition may include: The first distance is less than or equal to a second distance threshold, and the first signal strength is greater than a second strength threshold.

If the first acoustic wave frequency band is an acoustic wave frequency band other than the acoustic wave frequency band with the highest frequency and the acoustic wave frequency band with the lowest frequency in the at least two candidate acoustic wave frequency bands, and the first signal strength and the distance information meet a third condition, the first acoustic wave frequency band is determined as the target frequency band. The third condition includes: The first distance is greater than a second distance threshold, and the first distance is less than or equal to a first distance threshold; and/or the first signal strength is greater than a fourth strength threshold, and the first signal strength is less than or equal to a fifth strength threshold. The fourth strength threshold is less than the second strength threshold, and the fifth strength threshold is greater than the first strength threshold. In this case, the second distance threshold is less than the first distance threshold, and the fourth strength threshold is less than the fifth strength threshold.

It may be understood as that in this embodiment of this application, if the target acoustic wave frequency band is the same as the first acoustic wave frequency band, the first terminal device may continue receiving and/or sending the acoustic wave signal on the first acoustic wave frequency band, to continue measuring the relative orientation between the first terminal device and the second terminal device. That is, the first terminal device does not need to switch the acoustic wave frequency band.

When the first acoustic wave frequency band is the frequency band with the highest frequency in the at least two candidate acoustic wave frequency bands, it indicates that the first acoustic wave frequency band is an acoustic wave frequency band with best auditory experience in all candidate acoustic wave frequency bands. In this case, frequency band switching may not need to be performed, provided that the first distance is within the effective distance for measuring the orientation on the first acoustic wave frequency band, so that both auditory experience and the effective distance for measuring the orientation are better considered. Therefore, optionally, if the first acoustic wave frequency band is the frequency band with the highest frequency in at least two candidate acoustic wave frequency bands, for example, a frequency band #1 in the following frequency band #1 and frequency band #0, the second condition may include: The first distance is less than or equal to the first distance threshold, and the first signal strength is greater than the first strength threshold.

If the first distance is less than or equal to the first distance threshold, and the first signal strength is greater than the first strength threshold, it indicates that the first distance is within the effective distance for measuring the orientation on the first acoustic wave frequency band. In this case, the orientation is still measured through the first acoustic wave frequency band, so that both the auditory experience and the effective distance for measuring the orientation can be better considered.

When the first acoustic wave frequency band is the frequency band with the lowest frequency in the at least two candidate acoustic wave frequency bands, it indicates that the first acoustic wave frequency band is an acoustic wave frequency band with a largest effective distance for measuring the orientation in all candidate acoustic wave frequency bands. In this case, if the first distance is out of an effective distance for measuring the orientation on another candidate acoustic wave frequency band whose frequency is higher than the frequency of the first acoustic wave frequency band, and is still within the effective distance for measuring the orientation on the first acoustic wave frequency band, frequency band switching may not need to be performed. Therefore, the first acoustic wave frequency band is the frequency band with the lowest frequency in the at least two candidate acoustic wave frequency bands, for example, a frequency band #0 in the following frequency band #1 and frequency band #0. In this case, optionally, the first condition may include: The first distance is greater than a second distance threshold, and the first signal strength is less than or equal to a second strength threshold.

If the first distance is greater than the second distance threshold, and the first signal strength is less than or equal to the second strength threshold, it indicates that the first distance is out of an effective distance for measuring an orientation on another candidate acoustic wave frequency band whose frequency is higher than the frequency of the first acoustic wave frequency band, and is still within the effective distance for measuring the orientation on the first acoustic wave frequency band. In this case, the orientation is still measured through the first acoustic wave frequency band.

For example, the distance between the first terminal device and the second terminal device is within the effective distance for measuring the orientation on the first acoustic wave frequency band, and the first distance is greater than the effective distance for measuring the orientation on the another candidate acoustic wave frequency band whose frequency is higher than the frequency of the first acoustic wave frequency band. **In** this case, the first acoustic wave frequency band is an acoustic wave frequency band with a highest frequency for measuring the orientation. Therefore, to better consider auditory experience and the effective distance for measuring the orientation, the orientation may continue to be measured through the first acoustic wave frequency band. In this case, optionally, if the first acoustic wave frequency band is a candidate acoustic wave frequency band in the at least two candidate acoustic wave frequency bands other than a frequency band with a lowest frequency and a frequency band with a highest frequency, for example, a frequency band #3 in a frequency band #2 to a frequency band #4, the third condition includes: The first distance is less than or equal to a first distance threshold, and the first signal strength is greater than a fourth strength threshold; and the first distance is greater than a second distance threshold, and the first signal strength is less than or equal to a fifth strength threshold.

The second distance threshold is less than the first distance threshold. A fifth signal strength is greater than a fourth signal strength.

The first distance is less than or equal to a first distance threshold, and the first signal strength is greater than a fourth strength threshold; and if the first distance is greater than the second distance threshold, and the first signal strength is less than or equal to the fifth strength threshold, it indicates that the first distance is out of an effective distance for measuring an orientation on another candidate acoustic wave frequency band whose frequency is higher than the frequency of the first acoustic wave frequency band, and is still within the effective distance for measuring the orientation on the first acoustic wave frequency band. In this case, the orientation is still measured through the first acoustic wave frequency band.

It should be noted that the first distance threshold to the fourth distance threshold and the first strength threshold to the fifth strength threshold are all described for the first acoustic wave frequency band. For implementation principles of the first strength threshold to the fifth strength threshold, refer to related descriptions in Scenario 1. Details are not described herein again. If the first acoustic wave frequency band is a frequency band with a lowest frequency in the at least two candidate acoustic wave frequency bands, there is no target acoustic wave frequency band whose frequency is lower than the frequency of the first acoustic wave frequency band. If the first acoustic wave frequency band is a frequency band with a highest frequency in the at least two candidate acoustic wave frequency bands, there is no target acoustic wave frequency band whose frequency is higher than the frequency of the first acoustic wave frequency band.

In Scenario 2, because an interference signal that causes interference to an acoustic wave for measuring an orientation may exist in an environment in which the first terminal device and the second terminal device are located, if an interference signal on the target acoustic wave frequency band is less than an interference signal threshold, it indicates that the interference signal has less impact on measurement of an orientation. In this case, an acoustic wave signal may be received and sent based on the target acoustic wave frequency band, to measure the orientation.

For example, that the first terminal device switches, if the target acoustic wave frequency band is different from the first acoustic wave frequency band, to the target acoustic wave frequency band to receive and/or send the acoustic wave signal may include: The first terminal device switches, if the target acoustic wave frequency band is different from the first acoustic wave frequency band, and the signal strength of the interference signal on the target acoustic wave frequency band is less than or equal to the interference signal threshold, to the target acoustic wave frequency band to receive and/or send the acoustic wave signal. In this way, reliability of measuring the orientation can be improved.

If an interference signal on the target acoustic wave frequency band is greater than or equal to an interference signal threshold, it indicates that the interference signal has greater impact on measurement of an orientation. Therefore, in this case, a candidate acoustic wave frequency band other than the target acoustic wave frequency band may be selected from the at least two candidate acoustic wave frequency bands to send an acoustic wave signal, to measure the orientation. It should be noted that, if the candidate acoustic wave frequency bands include only the currently used acoustic wave frequency band and the target acoustic wave frequency band, and the interference on the target acoustic wave frequency band is large, switching may not be performed, and the current acoustic wave frequency band is still used for measuring the orientation.

In a possible design solution, if the target acoustic wave frequency band is different from the first acoustic wave frequency band, and the signal strength of the interference signal on the target acoustic wave frequency band is greater than the interference signal threshold, the first terminal device receives and/or sends the acoustic wave signal on a candidate acoustic wave frequency band other than the target acoustic wave frequency band in the at least two candidate acoustic wave frequency bands.

Because a user is not clear about strength of the interference signal on the target acoustic wave frequency band, in order that the user can obtain the strength of the interference signal on the target acoustic wave frequency band in time, the strength of the interference signal may be indicated to the user in a manner that can be sensed by the user, to improve user experience. For example, the method provided in FIG. 7A may further include: The first terminal device displays first notification information if the target acoustic wave frequency band is different from the first acoustic wave frequency band, and the signal strength of the interference signal on the target acoustic wave frequency band is greater than the interference signal threshold. The first notification information indicates that the signal strength of the interference signal on the target acoustic wave frequency band is greater than the interference signal threshold.

It may be understood that the first terminal device may further indicate the strength of the interference signal on the target acoustic wave frequency band in a manner that can be sensed by the user, for example, an acoustic wave signal that is audible (heard) by the user or an optical signal that can be seen by the user. Details are not described herein again.

In some embodiments, because the user is not clear about strength of an interference signal on each candidate acoustic wave frequency band, in order that the user can obtain strength of interference signals on the at least two candidate acoustic wave frequency bands in time, the first terminal device may display second notification information when the interference signal on each candidate acoustic wave frequency band is greater than an interference signal threshold corresponding to the candidate acoustic wave frequency band. The second notification information indicates that the interference signal on each of the at least two candidate acoustic wave frequency bands is greater than the interference signal threshold corresponding to the candidate acoustic wave frequency band.

In this way, when interference on each candidate acoustic wave frequency band is greater than or equal to the interference threshold corresponding to the candidate acoustic wave frequency band, the user may be notified in time, so that the user takes a corresponding remedial measure, thereby further improving user experience.

For an implementation of the interference signal threshold, refer to related descriptions of the first interference threshold to the third interference threshold in Scenario 3. Details are not described herein again.

The following separately describes Scenario 2 with reference to a case that the at least two candidate acoustic wave frequency bands include two candidate acoustic wave frequency bands or three candidate acoustic wave frequency bands.

### Example 1

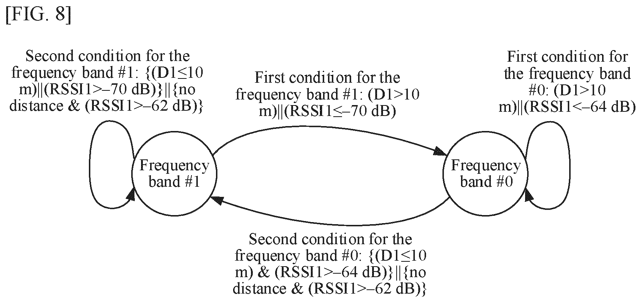

FIG. 8 is a diagram 1 of a relationship between a first acoustic wave frequency band and a target acoustic wave frequency band according to an embodiment of this application. As shown in FIG. 8, at least two candidate acoustic wave frequency bands include two candidate acoustic wave frequency bands: a frequency band #0 and a frequency band #1. A range of a frequency fre of the frequency band #0 is 6 kHz≤fre<10 kHz, and a range of a frequency fre of the frequency band #1 is 14 kHz≤fre<18 kHz.

Assuming that the first acoustic wave frequency band is the frequency band #1, a first distance threshold may be 10 meters (meter, m), a first strength threshold is -70 decibels (decibel, dB), and a third strength threshold is -62 dB, a first condition for the frequency band #1 includes: A first distance D1 is greater than 10 m, and/or first signal strength RSSI1 is less than or equal to -70 dB, that is, the first condition includes: (D1>10 m)∥(RSSI1≤-70 dB). For the frequency band #1, a second condition includes: A first distance D1 is less than or equal to 10 m, and first signal strength RSSI1 is greater than -70 dB; or a distance (which is briefly referred to as no distance below) between a first terminal device and a second terminal device is not detected, and the first signal strength is greater than -62 dB. That is, the second condition includes: {(D1≤10 m) & (RSSI1>-70 dB)}∥{no distance & (RSSI1>-62 dB)}.

It may be understood that, in this embodiment of this application, that the first condition is met may be that the first distance meets a distance-related condition in the first condition, or the first signal strength meets a signal strength-related condition in the first condition.

It should be noted that, in this embodiment of this application, both signal strength such as the first signal strength or second signal strength and a strength threshold such as the first strength threshold or a second strength threshold may be represented by using a quantized amplitude. For example, the signal strength may be represented by using 16 bits (bit). In this case, a value of the signal strength is from 0 to 2¹⁵, and details are not described subsequently.

If the first signal strength and distance information meet the first condition, the target acoustic wave frequency band is the frequency band #0.

If the first signal strength and distance information meet the second condition, the target acoustic wave frequency band is the frequency band #1.

It is assumed that the first acoustic wave frequency band is the frequency band #0, a second distance threshold may be 10 m, a second strength threshold is -64 dB, and a third strength threshold is -62 dB. For the frequency band #0, a first condition includes: A first distance D1 is greater than 10 m, and/or first signal strength RSSI1 is less than -64 dB. That is, the first condition includes: (D1>10 m)∥(RSSI1<-64 dB). A second condition includes: A first distance is less than or equal to 10 m, and first signal strength is greater than -64 dB; or a distance between a first terminal device and a second terminal device is not detected, and first signal strength is greater than -62 dB. That is, the second condition includes: {(D1≤10 m) & (RSSI1>-64 dB)}∥{no distance & (RSSI1>-62 dB)}.

If the first signal strength and distance information meet the second condition, the target acoustic wave frequency band is the frequency band #1.

If the first signal strength and distance information meet the first condition, the target acoustic wave frequency band is the frequency band #0.

It may be understood that, for different acoustic wave frequency bands, corresponding conditions have a same representation form, but specific thresholds may be different. For example, the first strength thresholds corresponding to the respective first conditions for the frequency band #0 and the frequency band #1 are different. Details are not described below again.

### Example 2

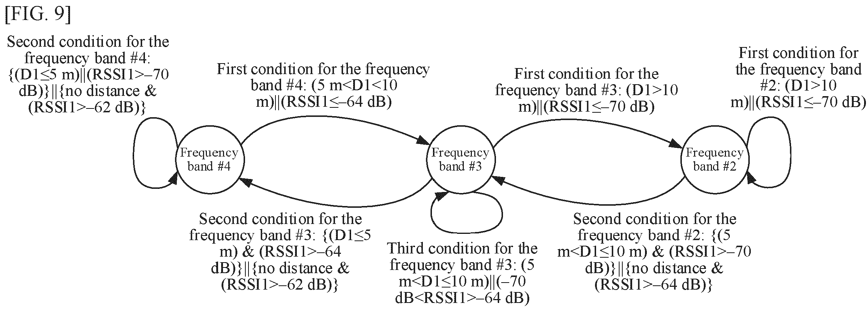

FIG. 9 is a diagram 2 of a relationship between a first acoustic wave frequency band and a target acoustic wave frequency band according to an embodiment of this application. As shown in FIG. 9, at least two candidate acoustic wave frequency bands include three candidate acoustic wave frequency bands: a frequency band #2, a frequency band #3, and a frequency band 4. A range of a frequency fre of the frequency band #2 is 6 kHz≤fre<10 kHz, and a range of a frequency fre of the frequency band #3 is 14 kHz≤fre<18 kHz, a range of a frequency fre of the frequency band #4 is 18 kHz≤fre<22 kHz.

Assuming that the first acoustic wave frequency band is the frequency band #4, a first distance threshold may be 5 m, a second distance threshold may be 5 m, and a first strength threshold is -64 dB, for the frequency band #4, a first condition includes: A first distance is greater than 5 m, and the first distance is less than or equal to 10 m, and/or first signal strength is less than or equal to -64 dB. That is, the first condition includes (5 m<D1<10 m)∥(RSSI1≤-64 dB). For the frequency band #4, a second condition includes: A first distance is greater than or equal to 5 m, and first signal strength is greater than -64 dB there is no distance, and the first signal strength is greater than -62 dB. That is, the second condition includes: {(D1≤5 m)∥(RSSI1>-70 dB)} {no distance & (RSSI1>-62 dB)}.

If the first signal strength and distance information meet the first condition, the target acoustic wave frequency band is the frequency band #3.

If the first signal strength and distance information meet the second condition, the target acoustic wave frequency band is the frequency band #4.

It is assumed that the first acoustic wave frequency band is the frequency band #3, a first distance threshold may be 10 m, a second distance threshold may be 5 m, a first strength threshold is -70 dB, a second strength threshold is -64 dB, and a third strength threshold is -62 dB. It is assumed that a fourth strength threshold is -70 dB, and a fifth strength threshold is -64 dB. For the frequency band #3, a first condition includes: A first distance is greater than 10 m, and/or first signal strength is less than or equal to -70 dB. That is, the first condition includes: (D1>10 m)∥(RSSI1≤-70 dB). For the frequency band #3, a second condition includes: A first distance is less than or equal to 5 m, and first signal strength is greater than -64 dB; or a distance between a second terminal device and a first terminal device is not detected, and first signal strength is greater than -62 dB. That is, the second condition includes: {(D1≤5 m) & (RSSI1>-64 dB)}∥{no distance & (RSSI1>-62 dB)}. For the frequency band #3, a third condition includes: A first distance is greater than 5 m, and the first distance is less than or equal to 10 m; and/or first signal strength is greater than - 64 dB, and the first signal strength is less than or equal to -62 dB. That is, the third condition includes (5 m<D1≤10 m)∥(-70 dB<RSSI1>-64 dB).

If the first signal strength and distance information meet the first condition, the target acoustic wave frequency band is the frequency band #2.

If the first signal strength and distance information meet the second condition, the target acoustic wave frequency band is the frequency band #4.

If the first signal strength and distance information meet third condition, the target acoustic wave frequency band is the frequency band #3.

It is assumed that the first acoustic wave frequency band is the frequency band #2, a second distance threshold may be 10 m, a second strength threshold is -70 dB, and a third strength threshold is -64 dB. For the frequency band #2, a second condition includes: A first distance is less than or equal to 10 m, the first distance is greater than 5 m, and first signal strength is greater than -70 dB; or a distance between a second terminal device and a first terminal device is not detected, and first signal strength is greater than -62 dB. That is, the second condition includes: {(5 m<D1≤10 m) & (RSSI1>-70 dB)}∥{no distance & (RSSI1>-64 dB)}. For the frequency band #2, a first condition includes: A first distance is greater than 10 m, and first signal strength is less than or equal to -70 dB. That is, the first condition includes: (D1>10 m)∥(RSSI1≤-70 dB).

If the first signal strength and distance information meet the second condition, the target acoustic wave frequency band is the frequency band #3.

If the first signal strength and distance information meet the first condition, the target acoustic wave frequency band is the frequency band #2.

Scenario 3: The first information includes the first signal strength, the distance information, and second signal strength of an interference signal on each of the at least two candidate acoustic wave frequency bands.

In this case, S703 may include: The first terminal device determines the target acoustic wave frequency band based on the first signal strength, the distance information, and the second signal strength of the interference signal on each of the at least two candidate acoustic wave frequency bands.

The following describes in detail how to determine the target acoustic wave frequency band in Scenario 3.

For the first signal strength and the distance information in Scenario 3, refer to descriptions in Scenario 2. Details are not described herein again. Because the interference signal affects a result of measuring the orientation by using the acoustic wave signal, for example, if there is the interference signal on a same frequency band as the target acoustic wave frequency band, an actual measurement orientation may be calculated based on the interference signal. Therefore, in Scenario 3, to improve reliability of a result of a measurement range, based on the first signal strength and the distance information in Scenario 2, a target acoustic wave frequency further needs to be determined based on the interference signal, to consider both auditory experience and the effective distance for measuring the orientation, and improve reliability of the measurement result. If second strength threshold corresponding to an interference signal on an acoustic wave frequency band is less than an interference threshold corresponding to the acoustic wave frequency band, it indicates that the acoustic wave frequency band is less affected by interference. In this case, a target acoustic wave frequency band may be determined based on the first information and second signal strength of the interference signal. For a related condition for determining the target acoustic wave frequency band, refer to the following descriptions.

If the first signal strength and the distance information meet the first condition, and candidate acoustic wave frequency bands meeting a sixth condition exist in the at least two candidate acoustic wave frequency bands, one of the candidate acoustic wave frequency bands meeting the sixth condition in the at least two candidate acoustic wave frequency bands is determined as the target acoustic wave frequency band.

The sixth condition is that second signal strength of an interference signal on a candidate acoustic wave frequency band is less than or equal to a first interference threshold corresponding to the candidate acoustic wave frequency band, and a frequency of the candidate acoustic wave frequency band is lower than the frequency of the first acoustic wave frequency band.

The sixth condition includes: Second signal strength of an interference signal on a candidate acoustic wave frequency band that is adjacent to the first acoustic wave frequency band is less than or equal to a first interference threshold corresponding to the candidate acoustic wave frequency band, and a frequency of the candidate acoustic wave frequency band is lower than the frequency of the first acoustic wave frequency band.

It can be learned with reference to the first condition and the sixth condition that, when the distance between the first terminal device and the second terminal device increases, if the first distance is greater than the first distance threshold, and/or the first signal strength is less than or equal to the first strength threshold, it indicates that the first distance exceeds the effective distance for measuring the orientation by using the acoustic wave signal on the first acoustic wave frequency band. Therefore, switching to an acoustic wave frequency band with a larger effective distance for measuring the orientation may be performed, that is, in the at least two candidate acoustic wave frequency bands, one of candidate acoustic wave frequency bands whose frequencies are lower than the frequency of the first acoustic wave frequency band and whose second signal strength of an interference signal is less than or equal to the first interference threshold corresponding to the candidate acoustic wave frequency band is determined as the target acoustic wave frequency band.

That is, the target acoustic wave frequency band is that the signal strength of the interference signal is less than or equal to the first interference threshold corresponding to the target acoustic wave frequency band, the target acoustic wave frequency band is adjacent to the first acoustic wave frequency band, and the frequency of the target acoustic wave frequency band is lower than the candidate acoustic wave frequency band of the first acoustic wave frequency band.

Optionally, the target acoustic wave frequency band may be a candidate acoustic wave frequency band with a highest frequency in the candidate acoustic wave frequency bands meeting the sixth condition. Based on this, in the at least two candidate acoustic wave frequency bands, if there are two candidate acoustic wave frequency bands whose frequencies are lower than the frequency of the first acoustic wave frequency band, and one of the two candidate acoustic wave frequency bands is contiguous with the first acoustic wave frequency band, and when the first condition includes: The first distance is greater than the first distance threshold, the first condition further includes: The first distance is less than or equal to a second distance threshold. For an implementation of the second distance threshold, refer to related descriptions in Scenario 2. Details are not described herein again.

The second distance threshold is determined based on an effective distance for measuring an orientation on a candidate acoustic wave frequency band that is contiguous with the first acoustic wave frequency band and whose frequency is lower than the frequency of the first acoustic wave frequency band.

If the first signal strength and the distance information meet a seventh condition, the first acoustic wave frequency band meets an eighth condition, and candidate acoustic wave frequency bands meeting a ninth condition exist in the at least two candidate acoustic wave frequency bands, one of the candidate acoustic wave frequency bands meeting the ninth condition in the at least two candidate acoustic wave frequency bands is determined as the target acoustic wave frequency band.

The seventh condition includes: The first distance is less than or equal to a first distance threshold, and/or the first signal strength is greater than a first strength threshold. The eighth condition may include: Second signal strength of an interference signal on the first acoustic wave frequency band is greater than a second interference threshold.

The ninth condition includes: Second signal strength of an interference signal on a candidate acoustic wave frequency band is less than or equal to a first interference threshold corresponding to the candidate acoustic wave frequency band, and a frequency of the candidate acoustic wave frequency band is lower than the frequency of the first acoustic wave frequency band.

Optionally, the target acoustic wave frequency band may be a candidate acoustic wave frequency band with a highest frequency in the candidate acoustic wave frequency bands meeting the ninth condition. In this way, the candidate acoustic wave frequency band with better auditory experience may be selected, to better consider auditory experience and the effective distance for measuring the orientation.

It may be learned with reference to the seventh condition to the ninth condition that, the first distance is less than or equal to the first distance threshold, and/or the first signal strength is greater than the first strength threshold. In addition, when the second signal strength of the interference signal on the first acoustic wave frequency band is greater than the second interference threshold, a candidate acoustic wave frequency band whose second signal strength of the interference signal in the candidate acoustic wave frequency band in the at least two candidate acoustic wave frequency bands is less than or equal to the first interference threshold corresponding to the candidate acoustic wave frequency band and whose frequency is lower than the frequency of the first acoustic wave frequency band may be determined as the target acoustic wave frequency band.

If the first signal strength and the distance information meet the second condition, and candidate acoustic wave frequency bands meeting a tenth condition exist in the at least two candidate acoustic wave frequency bands, one of the candidate acoustic wave frequency bands meeting the tenth condition in the at least two candidate acoustic wave frequency bands is determined as the target acoustic wave frequency band.

The tenth condition includes: Second signal strength of an interference signal on a candidate acoustic wave frequency band is less than or equal to a third interference threshold corresponding to the candidate acoustic wave frequency band, and a frequency of the candidate acoustic wave frequency band is higher than the frequency of the first acoustic wave frequency band.

It can be learned with reference to the second condition and the tenth condition that when the first distance between the first terminal device and the second terminal device is less than or equal to the second distance threshold, and the first signal strength is greater than the second strength threshold, or when the distance between the first terminal device and the second terminal device is not detected, and the first signal strength is greater than the third strength threshold, in the at least two candidate acoustic wave frequency bands, a candidate acoustic wave frequency band whose second signal strength of an interference signal on a candidate acoustic wave frequency band is less than or equal to a third interference threshold corresponding to the candidate acoustic wave frequency band and whose frequency is higher than the frequency of the first acoustic wave frequency band may be determined as the target acoustic wave frequency band.
if the first signal strength and the distance information meet an eleventh condition, the first acoustic wave frequency band meets a twelfth condition, and candidate acoustic wave frequency bands meeting a thirteenth condition exist in the at least two candidate acoustic wave frequency bands, one of the candidate acoustic wave frequency bands meeting the thirteenth condition in the at least two candidate acoustic wave frequency bands is determined as the target acoustic wave frequency band.

The eleventh condition includes: The first distance is greater than a second distance threshold, and/or the first signal strength is less than or equal to a second strength threshold. The twelfth condition includes: Second signal strength of an interference signal on the first acoustic wave frequency band is greater than a third interference threshold corresponding to the first acoustic wave frequency band.

The thirteenth condition includes: Second signal strength of an interference signal on a candidate acoustic wave frequency band is less than or equal to a fourth interference threshold corresponding to the candidate acoustic wave frequency band.

It can be learned with reference to the eleventh condition to the thirteenth condition that, if the first distance is greater than the second distance threshold, and/or the first signal strength is less than or equal to the second strength threshold, and the second signal strength of the interference signal on the first acoustic wave frequency band is greater than the third interference threshold corresponding to the first acoustic wave frequency band, a candidate acoustic wave frequency band whose second signal strength of the interference signal on the candidate acoustic wave frequency band in the at least two candidate acoustic wave frequency bands is less than or equal to the fourth interference threshold corresponding to the candidate acoustic wave frequency band may be determined as the target acoustic wave frequency band.

In a possible design solution, that the first terminal device determines the target acoustic wave frequency band based on the first signal strength, the distance information, and the second signal strength on each of the at least two candidate acoustic wave frequency bands may include: determining the first acoustic wave frequency band as the target acoustic wave frequency band if the first acoustic wave frequency band is an acoustic wave frequency band with a lowest frequency in the at least two candidate acoustic wave frequency bands, the first information meets the first condition, and the second signal strength of the interference signal on the first acoustic wave frequency band is less than or equal to a fifth interference threshold; or determining the first acoustic wave frequency band as the target acoustic wave frequency band if the first acoustic wave frequency band is an acoustic wave frequency band with a lowest frequency in the at least two candidate acoustic wave frequency bands, the first information meets the seventh condition, and the second signal strength of the interference signal on the first acoustic wave frequency band is less than or equal to a fifth interference threshold. In this case, the first condition includes: The first distance is greater than the first distance threshold, the first signal strength is less than or equal to the first strength threshold, and the second signal strength of the interference signal on the first acoustic wave frequency band is less than or equal to the fifth interference threshold.

The first acoustic wave frequency band is determined as the target acoustic wave frequency band if the first acoustic wave frequency band is an acoustic wave frequency band with a lowest frequency in the at least two candidate acoustic wave frequency bands, the first acoustic wave frequency band meets the second condition, and the second signal strength of the interference signal on the first acoustic wave frequency band is less than or equal to a fifth interference threshold, the first acoustic wave frequency band is determined as the target acoustic wave frequency band. Alternatively, if the first acoustic wave frequency band is an acoustic wave frequency band with a lowest frequency in the at least two candidate acoustic wave frequency bands, the first information meets an eleventh condition, and the second signal strength of the interference signal on the first acoustic wave frequency band is less than or equal to a fifth interference threshold. The first condition includes: The first distance is greater than a second distance threshold, and/or the first signal strength is less than or equal to a second strength threshold.

The first acoustic wave frequency band is determined as the target acoustic wave frequency band if the first acoustic wave frequency band is an acoustic wave frequency band other than an acoustic wave frequency band with a highest frequency and an acoustic wave frequency band with a lowest frequency in the at least two candidate acoustic wave frequency bands, the first information meets a third condition, and the second signal strength of the interference signal on the first acoustic wave frequency band is less than or equal to a fifth interference threshold. The third condition includes: The first distance is greater than a second distance threshold, and the first distance is less than or equal to a first distance threshold; and/or the first signal strength is greater than a fourth strength threshold, and the first signal strength is less than or equal to a fifth strength threshold. The fourth strength threshold is less than the second strength threshold, and the fifth strength threshold is greater than the first strength threshold. It may be understood that in this case, the second distance threshold is less than the first distance threshold, and the fourth strength threshold is less than the fifth strength threshold.

### Example 3

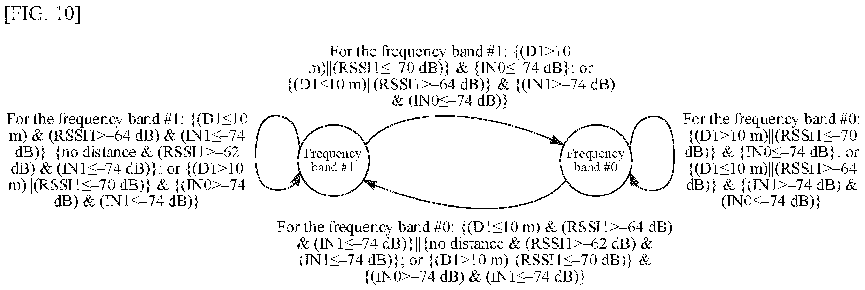

FIG. 10 is a diagram 3 of a relationship between a first acoustic wave frequency band and a target acoustic wave frequency band according to an embodiment of this application. As shown in FIG. 10, at least two candidate acoustic wave frequency bands include two candidate acoustic wave frequency bands: a frequency band #0 and a frequency band #1. A range of a frequency fre of the frequency band #0 is 6 kHz≤fre<10 kHz, and a range of a frequency fre of the frequency band #1 is 14 kHz≤fre<18 kHz.

Assuming that the first acoustic wave frequency band is the frequency band #1, a first distance threshold may be 10 m, a first strength threshold is -70 dB, a first interference threshold is -74 dB, and a second interference threshold is -74 dB, a first condition for the frequency band #0 includes: A first distance is greater than 10 m, and/or first signal strength is less than or equal to -70 dB, that is, (D1>10 m)∥(RSSI1≤-70 dB). For the frequency band #1, a sixth condition is that second signal strength of an interference signal on a candidate acoustic wave frequency band is less than or equal to -74 dB, and a frequency of the candidate acoustic wave frequency band is lower than a frequency of the first acoustic wave frequency band.

For the frequency band #1, a seventh condition includes: A first distance D1 is less than or equal to 10 m, and/or first signal strength RSSI1 is greater than -70 dB, that is, (D1≤10 m)∥(RSSI1>-64 dB); or an eighth condition includes: Second signal strength IN1 of an interference signal on the frequency band #1 is less than or equal to -74 dB, that is, IN1>-74 dB.

For the frequency band #1, a ninth condition includes: Second signal strength IN0 of an interference signal on the frequency band #0 is less than or equal to a second interference threshold -74 dB corresponding to the frequency band #0, that is, IN0≤-74 dB.

For the frequency band #1, a second condition includes: A first distance D1 is less than or equal to 10 m, and/or first signal strength RSSI1 is greater than -64 dB, that is, (D1≤10 m) & (RSSI1>-64 dB); or a distance between a second terminal device and a first terminal device is not detected, and first signal strength RSSI1 is greater than -62 dB, that is, no distance & (RSSI1>-62 dB).

An eleventh condition includes: A first distance D1 is less than 10 m, and/or first signal strength RSSI1 is less than -70 dB, that is, (D1>10 m)∥(RSSI1≤-70 dB).

A twelfth condition includes: Second signal strength IN1 of an interference signal on the frequency band #1<-74 dB.

If the first signal strength and distance information meet the first condition, and the second signal strength of the interference signal on the frequency band #0 is less than or equal to -74 dB, the target acoustic wave frequency band is the frequency band #0. If the first signal strength and the distance information meet the seventh condition, the first acoustic wave frequency band meets the eighth condition, the second signal strength of the interference signal on the frequency band #0 is less than or equal to -74 dB corresponding to the candidate acoustic wave frequency band, and the frequency of the frequency band #0 is lower than the frequency of the first acoustic wave frequency band, the target acoustic wave frequency band is the frequency band #0. That is, if {(D1>10 m)∥(RSSI1≤-70 dB)} & {IN0<-74 dB}, or {(D1≤10 m)∥(RSSI1>-64 dB)} & {(IN1>-74 dB) & (IN0≤-74 dB)}, the target acoustic wave frequency band is the frequency band #0.

If the first signal strength meets the second condition, and the second signal strength of the interference signal on the frequency band #1 is less than or equal to -74 dB, the target acoustic wave frequency band is the frequency band #1. If the first signal strength meets the second condition, the frequency band #0 meets the twelfth condition, and the second signal strength of the interference signal on the frequency band #1 is less than or equal to -74 dB, the target acoustic wave frequency band is the frequency band #1. That is, if {(D1≤10 m) & (RSSI1>-64 dB) & (IN1≤-74 dB)}∥{no distance & (RSSI1>-62 dB) & (IN1≤-74 dB)}, or {(D1>10 m)∥(RSSI1≤-70 dB)} & {(IN0>-74 dB) & (IN1≤-74 dB)}, the target acoustic wave frequency band is the frequency band #1.

It is assumed that the first acoustic wave frequency band is the frequency band #0, a second distance threshold may be 10 m, a second strength threshold is -64 dB, a third strength threshold is -62 dB, and a third interference threshold is -74 dB.

For the frequency band #0, a first condition includes: A first distance D1 is greater than 10 m, and/or first signal strength RSSI1 is less than or equal to -70 dB, that is, (D1>10 m)∥(RSSI1≤-70 dB).

For the frequency band #0, a seventh condition includes: A first distance D1 is less than or equal to 10 m, and/or first signal strength RSSI1 is greater than -64 dB, that is, (D1≤10 m)∥(RSSI1>-64 dB); or an eighth condition includes: Second signal strength of an interference signal on the frequency band #0 is less than or equal to -74 dB, that is, IN0≤-74 dB.

For the frequency band #0, a tenth condition and a thirteenth condition include: Second signal strength IN1 of an interference signal on the frequency band #1 is less than or equal to a second interference threshold -74 dB corresponding to the candidate acoustic wave frequency band, that is, IN1≤-74 dB.

A second condition includes: A first distance is less than or equal to 10 m, and/or first signal strength is greater than -64 dB, that is, (D1≤10 m) & (RSSI1>-64 dB); or a distance between a second terminal device and a first terminal device is not detected, and first signal strength is greater than -62 dB, that is, no distance & (RSSI1>-62 dB).

An eleventh condition includes: A first distance is less than 10 m, and/or first signal strength is less than -70 dB, that is, (D1>10 m)∥(RSSI1≤-70 dB).

A twelfth condition includes: Second signal strength of an interference signal on the frequency band #0 is greater than -74 dB, that is, IN0>-74 dB.

If the first signal strength and distance information meet the first condition, and the second signal strength of the interference signal on the frequency band #0 is less than or equal to -74 dB, the target acoustic wave frequency band is the frequency band #0. If the first signal strength and distance information meet the seventh condition, the frequency band #0 meets the eighth condition, and the second signal strength of the interference signal on the frequency band #0 is less than or equal to -74 dB, the target acoustic wave frequency band is the frequency band #0. That is, if {(D1>10 m)∥(RSSI1≤-70 dB)} & {IN0≤-74 dB}, or {(D1≤10 m)∥(RSSI1>-64 dB)} & {(IN1>-74 dB) & (IN0≤-74 dB)}, the target acoustic wave frequency band is the frequency band #0.

If the first signal strength and distance information meet the second condition, and the second signal strength of the interference signal on the frequency band #1 is less than or equal to -74 dB, that is, IN1≤-74 dB (the tenth condition), the target acoustic wave frequency band is the frequency band #1. If the first signal strength and distance information meet the eleventh condition, the frequency band #0 meets the twelfth condition, and the second signal strength of the interference signal on the frequency band #1 is less than or equal to -74 dB (the thirteenth condition), the target acoustic wave frequency band is the frequency band #1. That is, if {(D1≤10 m) & (RSSI1>-64 dB) & (IN1≤-74 dB)}∥{no distance & (RSSI1>-62 dB) & (IN1≤-74 dB)}, or {(D1>10 m)∥(RSSI1≤-70 dB)} & {(IN0>-74 dB) & (IN1≤-74 dB)}, the target acoustic wave frequency band is the frequency band #1.

When the at least two candidate acoustic wave frequency bands include the three candidate acoustic wave frequency bands, an implementation principle of the target acoustic wave frequency band may be implemented with reference to the principles in Example 2 and Example 3, and details are not described herein again.

It may be understood that, in Scenario 3, a threshold having a same name as that in Scenario 2, for example, any one of a first strength threshold, a second strength threshold, a third strength threshold, and a first distance threshold to a fourth distance threshold, may be the same as or different from the corresponding threshold in Scenario 2. Details are not described herein again.

In the at least two candidate acoustic wave frequency bands, there are a first interference threshold and a second interference threshold corresponding to a candidate acoustic wave frequency band with a highest frequency, and there are a third interference threshold and a fourth interference threshold corresponding to a candidate acoustic wave frequency band with a lowest frequency. In the at least two candidate acoustic wave frequency bands, there are a first interference threshold to a fourth interference threshold on a candidate acoustic wave frequency band other than the candidate acoustic wave frequency band with the highest frequency and the candidate acoustic wave frequency band with the lowest frequency.

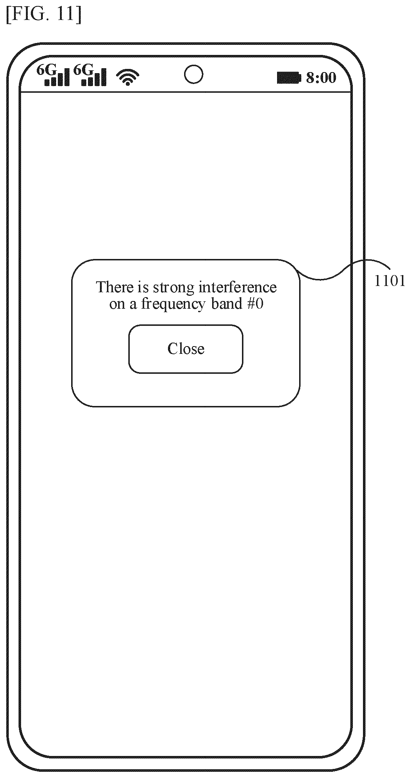

It should be noted that, when the first signal strength and the distance information meet the first condition on a candidate acoustic wave frequency bands other than the first acoustic wave frequency band in the at least two candidate acoustic wave frequency bands, no candidate acoustic wave frequency band meeting the seventh condition exists in the at least two candidate acoustic wave frequency bands. In this case, as shown in FIG. 11, for example, when the at least two candidate acoustic wave frequency bands include a frequency band #1 and a frequency band #0, if the first acoustic wave frequency band is the frequency band #1, and second signal strength of an interference signal on the frequency band #0 is greater than a first interference threshold corresponding to the frequency band #0, the first terminal device may display "There is strong interference on a frequency band #0".

Similarly, if the first signal strength, the distance information, and the first acoustic wave frequency band meet the seventh condition in the at least two candidate acoustic wave frequency bands, but no candidate acoustic wave frequency band meeting the eighth condition exists in the at least two candidate acoustic wave frequency bands, the first terminal device may display a prompt box 1101, where the prompt box 1101 may indicate a candidate acoustic wave frequency band on which interference exists. Details are not described herein again.

If the first signal strength and the distance information meet the second condition, but no candidate acoustic wave frequency band meeting the ninth condition exists in the at least two candidate acoustic wave frequency bands, the first terminal device may display a prompt box 1101, where the prompt box 1101 may indicate a candidate acoustic wave frequency band on which interference exists. Details are not described herein again.

If the first signal strength, the distance information, and the first acoustic wave frequency band meet the tenth condition, but no candidate acoustic wave frequency band meeting the ninth condition exists in the at least two candidate acoustic wave frequency bands, the first terminal device may display a prompt box 1101, where the prompt box 1101 may indicate a candidate acoustic wave frequency band on which interference exists. Details are not described herein again.

Scenario 4: The first information includes the first signal strength, the distance information, and second signal strength of an interference signal on a candidate acoustic wave frequency band with a lowest frequency in the at least two candidate acoustic wave frequency bands.

In this case, S703 may include: The first terminal device determines the target acoustic wave frequency band based on the first signal strength, the distance information, and the second signal strength of the interference signal on the candidate acoustic wave frequency band with the lowest frequency in the at least two candidate acoustic wave frequency bands.

In an actual environment, a probability of interference (noise) on an acoustic wave frequency band with a lower frequency increases (or noise on an acoustic wave with a lower frequency is greater than noise on an acoustic wave with a higher frequency), and auditory experience is poorer. Therefore, to improve user experience, and improve accuracy and precision of an orientation measurement result, the acoustic wave frequency band with the higher frequency may be used as much as possible for orientation measurement, and the acoustic wave frequency band with the lower frequency is used less for the orientation measurement.

For ease of understanding, the following provides further descriptions with reference to Scenario 4.1 and Scenario 4.2.

Scenario 4.1: In a possible implementation solution, if the distance information indicates the first distance between the first terminal device and the second terminal device, the at least two candidate acoustic wave frequency bands include the two candidate acoustic wave frequency bands, the first acoustic wave frequency band is one of the two candidate acoustic wave frequency bands, and the frequency of the first acoustic wave frequency band is higher than a frequency of a fourth candidate acoustic wave frequency band, where the fourth candidate acoustic wave frequency band is a candidate acoustic wave frequency band other than the first acoustic wave frequency band in the two candidate acoustic wave frequency bands, the first information further includes signal strength of an interference signal on the fourth candidate acoustic wave frequency band. In this case, that the first terminal device determines a target acoustic wave frequency band based on the first information includes: if the first information meets a fourteenth condition, determining the fourth candidate acoustic wave frequency band as the target acoustic wave frequency band. The fourteenth condition includes: The first signal strength is less than or equal to a sixth strength threshold, and the signal strength of the interference signal on the fourth candidate acoustic wave frequency band is less than or equal to an interference signal threshold corresponding to the fourth candidate acoustic wave frequency band, for example, a sixth interference threshold.

For example, the two candidate acoustic wave frequency bands may include an acoustic wave frequency band of 14 kHz to 18 kHz and an acoustic wave frequency band of 6 kHz to 10 kHz. In this case, the first acoustic wave frequency band is the acoustic wave frequency band of 14 kHz to 18 kHz. When the first information meets the fourteenth condition, the target acoustic wave frequency band is the acoustic wave frequency band of 6 kHz to 10 kHz.

Optionally, the sixth strength threshold is determined based on the first distance. In this way, a bag scenario can be more accurately identified.

Optionally, that the first signal strength is less than or equal to a sixth strength threshold means that in M1 times of signal strength and interference signal measurement, the first signal strength obtained in each time of measurement is less than or equal to the sixth strength threshold. That the signal strength of the interference signal on the fourth candidate acoustic wave frequency band is less than or equal to an interference signal threshold corresponding to the fourth candidate acoustic wave frequency band means that in the M1 times of signal strength and interference signal measurement, the signal strength that is of the interference signal on the fourth candidate acoustic wave frequency band and that is obtained in each time of measurement is less than or equal to the interference signal threshold corresponding to the fourth candidate acoustic wave frequency band. M1 is an integer greater than or equal to 1. The M1 times of signal strength and interference signal measurement mean measuring strength of an effective acoustic wave signal and strength of an interference signal other than the effective acoustic wave. Determining is performed based on results of a plurality of times of signal strength and interference signal measurement, so that a signal status can be more accurately reflected, and incorrect switching of an acoustic wave frequency caused by occasional signal fluctuation is avoided.

For example, the first terminal device performs the M1 times of signal strength and interference signal measurement, where a first distance *d*ᵢ, first signal strength *RSSI*_{H,i} on the first acoustic wave frequency band, and interference signal strength *Interf*_{L,i} on the fourth candidate acoustic wave frequency band are obtained in an i^{th} time of signal strength and interference signal measurement, where i=1, 2, ..., M1. In this case, the fourteenth condition may be represented as *RSSI*_{H,i}≤*RSSI*_{*thr*1}*,* and *Interf*_{L,I}<*Interf*ₜₕᵣ₁*.*

*RSSI*ₜₕᵣ₁ is the sixth strength threshold, and *Interf*ₜₕᵣ₁is the interference signal threshold corresponding to the fourth candidate acoustic wave frequency band.

It should be understood that the M1 times of signal strength and interference signal measurement are contiguous. That is, in the M1 times of signal strength and interference signal measurement, there is no other signal strength and interference measurement between any two adjacent times of signal strength and interference signal measurement.

*RSSI*ₜₕᵣ₁ may be a dynamic change value related to the first distance, for example, *RSSI*ₜₕᵣ₁=R-α**d*ᵢ*.*

Both R and α are predefined values. For example, R=30, and α=0.3. A decrease of the first signal strength RSSI may be caused by an obstruction such as a bag, or may be caused by distance attenuation. Because a noise floor of a low frequency acoustic wave is large, a coverage gain of the low frequency acoustic wave is limited compared with that of a high frequency acoustic wave in an unobstructed scenario, that is, a largest coverage distance that can be achieved by using the high frequency acoustic wave is equivalent to that of the low frequency acoustic wave in the unobstructed scenario. However, in an obstructed scenario with the obstruction such as the bag, using the low frequency acoustic wave can greatly increase a coverage distance. For example, when a target device is placed in a bag, a coverage distance of the high frequency acoustic wave is only 2 m, and the coverage distance of the low frequency acoustic wave can reach more than 10 m. Therefore, coverage is significantly increased. In this way, a larger distance indicates smaller RSSIₜₕᵣ₁, and a smaller distance indicates larger *RSSI*ₜₕᵣ₁, so that a bag scenario is accurately identified.

The low frequency acoustic wave is switched to in an obstructed scenario, and the low frequency acoustic wave is not switched to in a distance attenuation scenario, so that usage of an acoustic wave with a lower frequency is further reduced, and auditory experience of the user is improved.

When distances are the same, signal strength in a bag-obstructed scenario is weaker than that without an obstruction due to a penetration loss of the bag. To distinguish between the two scenarios: the bag-obstructed scenario and the distance attenuation scenario, the sixth strength threshold *RSSI*ₜₕᵣ₁ cannot be set to a fixed value, but the sixth strength thresholds at different distances need to be different, and need to be lower than signal strength without an obstruction at a same distance. In addition, a larger distance indicates smaller *RSSI*ₜₕᵣ₁*,* and a smaller distance indicates larger *RSSI*ₜₕᵣ₁. That is, the sixth strength threshold is negatively correlated with the distance. Based on this, *RSSI*ₜₕᵣ₁ and the first distance *d*ᵢ may meet the following relationship: *RSSI*ₜₕᵣ₁*=*R-α**d*ᵢ*.* Certainly, *RSSI*ₜₕᵣ₁ and the first distance *d*ᵢ may further meet another relationship, for example, a correspondence. For example, assuming that a change range of the first distance *d*ᵢ is from 1 meter to 15 meters, *RSSI*ₜₕᵣ₁ and the first distance *d*ᵢ may meet a correspondence in the following Table 2.

**Table 2**

| *d*ᵢ (meter) | 1 to 3 | 3 to 6 | 6 to 9 | 9 to 12 | 12 to 15 |
|---|---|---|---|---|---|
| *RSSI*ₜₕᵣ₁ | 1000 | 800 | 700 | 550 | 450 |

It may be understood that the change range of the first distance herein is merely used as an example. In actual implementation, the change range of the first distance may alternatively be another possible range. Details are not described herein again.

In addition, it should be understood that, in Scenario 4.1, if the first information does not meet the fourteenth condition, the acoustic wave frequency band may not need to be switched, that is, the first acoustic wave frequency band may be determined as the target acoustic wave frequency band.

Scenario 4.2: In a possible implementation solution, if the distance information indicates the first distance between the first terminal device and the second terminal device, the at least two candidate acoustic wave frequency bands include the two candidate acoustic wave frequency bands, the first acoustic wave frequency band is one of the two candidate acoustic wave frequency bands, and the frequency of the first acoustic wave frequency band is lower than a frequency of a fifth candidate acoustic wave frequency band, where the fifth candidate acoustic wave frequency band is a candidate acoustic wave frequency band other than the first acoustic wave frequency band in the two candidate acoustic wave frequency bands, the first information further includes signal strength of an interference signal on the first acoustic wave frequency band. In this case, that the first terminal device determines a target acoustic wave frequency band based on the first information includes: if the first information meets a fifteenth condition, determining the fifth candidate acoustic wave frequency band as the target acoustic wave frequency band. The fifteenth condition includes: The first signal strength is greater than a seventh strength threshold, and/or the signal strength of the interference signal on the first acoustic wave frequency band is greater than an interference signal threshold corresponding to the fifth candidate acoustic wave frequency band, for example, a seventh interference threshold.

For example, the two candidate acoustic wave frequency bands may include an acoustic wave frequency band of 14 kHz to 18 kHz and an acoustic wave frequency band of 6 kHz to 10 kHz. In this case, the first acoustic wave frequency band is the acoustic wave frequency band of 6 kHz to 10 kHz. When the first information meets the fifteenth condition, the target acoustic wave frequency band is the acoustic wave frequency band of 14 kHz to 18 kHz.

Optionally, the seventh strength threshold is determined based on the first distance. In this way, a bag scenario can be more accurately identified.

Optionally, that the first signal strength is less than or equal to a seventh strength threshold means that in M2 times of signal strength measurement, the first signal strength obtained in each time of signal strength measurement is less than or equal to the seventh strength threshold, where M2 is an integer greater than or equal to 1. Determining is performed based on results of a plurality of times of signal strength measurement, so that a signal status can be more accurately reflected, and incorrect switching of an acoustic wave frequency caused by occasional signal fluctuation is avoided.

Optionally, that the signal strength of the interference signal on the first acoustic wave frequency band is greater than an interference signal threshold corresponding to the fifth candidate acoustic wave frequency band means that in M3 times of interference signal measurement, the signal strength that is of the interference signal on the first acoustic wave frequency band and that is obtained in each time of interference signal measurement is greater than the interference signal threshold corresponding to the fifth candidate acoustic wave frequency band. M3 is an integer greater than or equal to 1. Determining is performed based on results of a plurality of times of measurement, so that a signal status can be more accurately reflected, and incorrect switching of an acoustic wave frequency caused by occasional signal fluctuation is avoided.

The first terminal device performs the M2 times of signal strength measurements, where first signal strength on the first acoustic wave frequency band obtained in a j^{th} time of signal strength measurement is *RSSI*_{H,j}*,* and j=1, 2, ..., M2.

The first terminal device performs the M3 times of interference signal measurement, where interference signal strength on the fifth candidate acoustic wave frequency band obtained in a k^{th} time of interference signal measurement is *Interf*_{L,k}, and k=1, 2, ..., M3.

In this case, the fifteenth condition may be represented as *RSSI*_{L,j}≥RSSIₜₕᵣ₂, and/or *Interf*_{L*,*i} >Interfₜₕᵣ₂.

RSSIₜₕᵣ₂ is the sixth strength threshold, and Interfₜₕᵣ₂ is the interference signal threshold corresponding to the first acoustic wave frequency band.

RSSIₜₕᵣ₂ may be a dynamic change value related to a ranging result, for example, RSSIₜₕᵣ₂ =P-β**d*ᵢ. Both P and β are predefined values, for example, P=300, and β=10. In this way, a larger distance indicates smaller RSSIₜₕᵣ₂, and a smaller distance indicates larger RSSIₜₕᵣ₂, so that a bag scenario is accurately identified. Similarly, in Scenario 4.1, a specific relationship between RSSIₜₕᵣ₂ and the ranging result may alternatively be modeled in another form, for example, in a table mapping manner.

Scenario 4.3: If the distance between the first terminal device and the second terminal device is not detected, an acoustic wave frequency band with a higher frequency in two candidate acoustic wave frequency bands may be determined as a target acoustic wave frequency band.

It should be understood that, in this embodiment of this application, that a frequency of an acoustic wave frequency band A is higher than a frequency of an acoustic wave frequency band B may mean that a center frequency of the acoustic wave frequency band A is higher than a center frequency of the acoustic wave frequency band B, a lowest frequency of the acoustic wave frequency band A is higher than a lowest frequency of the acoustic wave frequency band B, the lowest frequency of the acoustic wave frequency band A is higher than a highest frequency of the acoustic wave frequency band B, or a highest frequency of the acoustic wave frequency band A is higher than the highest frequency of the acoustic wave frequency band B. Details are not described herein.

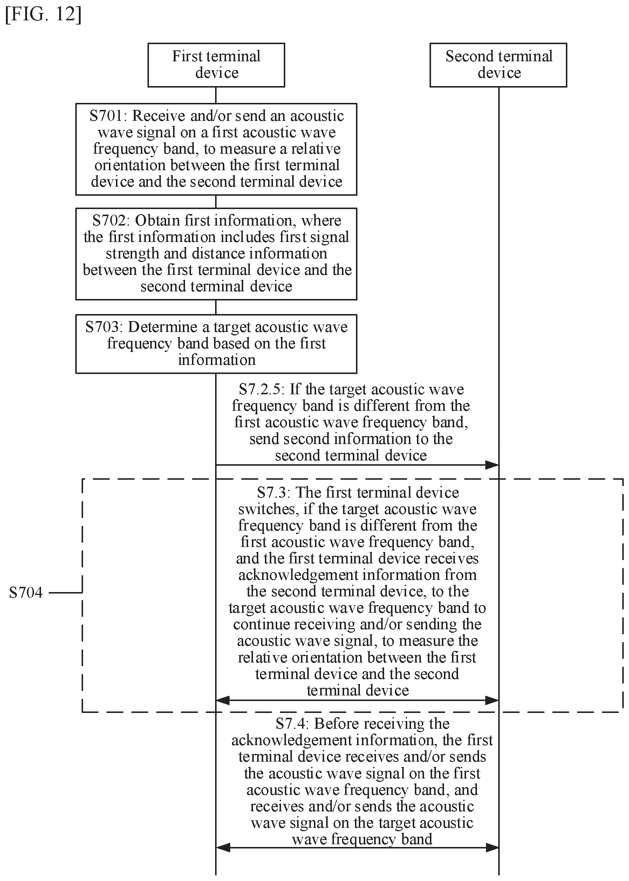

As shown in FIG. 12, in this embodiment of this application, before S704, the method provided in FIG. 7A may further include S7.2.5.

S7.2.5: If the target acoustic wave frequency band is the candidate acoustic wave frequency band other than the first acoustic wave frequency band in the at least two candidate acoustic wave frequency bands, the first terminal device sends second information to the second terminal device. Correspondingly, the second terminal device receives the second information from the first terminal device.

The second information indicates the second terminal device to switch to the target acoustic wave frequency band.

In a possible design solution, that the first terminal device sends second information to the second terminal device includes: The first terminal device sends the second information to the second terminal device over a radio frequency communication link. Correspondingly, that the second terminal device receives the second information from the first terminal device may include: The second terminal device receives the second information from the first terminal device over the radio frequency communication link.

It may be understood that, in this embodiment of this application, the second information may alternatively be sent over an ultrasonic communication link.

In a possible design solution, the second information may indicate one or more of the following of the target acoustic wave frequency band: a start frequency, an end frequency, or a center frequency, to indicate the target acoustic wave frequency band.

For example, the second information may include a bandwidth and the start frequency. Assuming that a range of a frequency fre of the target acoustic wave frequency band is 6 kHz≤fre<10 kHz, the second information may indicate that a start frequency of 6 kHz and a bandwidth of 4 kHz that are of the target acoustic wave frequency band.

Alternatively, the second information may include a bandwidth and an end frequency. Assuming that a range of a frequency fre of the target acoustic wave frequency band is 6 kHz≤fre<10 kHz, the second information may indicate an end frequency of 10 kHz and a bandwidth of 4 kHz that are of the target acoustic wave frequency band.

Alternatively, the second information may include a bandwidth and a center frequency. Assuming that a range of a frequency fre of the target acoustic wave frequency band is 6 kHz≤fre<10 kHz, the second information may indicate a center frequency of 10 kHz and a bandwidth of 4 kHz that are of the target acoustic wave frequency band.

Optionally, the second information may further indicate a bandwidth of the target acoustic wave frequency band. Alternatively, optionally, a frequency band bandwidth may be preconfigured in the second terminal device and the first terminal device, and the bandwidth of the target acoustic wave frequency band is the preconfigured frequency band bandwidth.

In another possible design solution, the second information may indicate any two of the following: a start frequency, an end frequency, or a center frequency.

For example, the second information may indicate the start frequency and the end frequency. Assuming that a range of a frequency fre of the target acoustic wave frequency band is 6 kHz≤fre<10 kHz, the second information may indicate a start frequency of 6 kHz and an end frequency of 10 kHz that are of the target acoustic wave frequency band.

Alternatively, the second information may indicate a start frequency and a center frequency. Assuming that a range of a frequency fre of the target acoustic wave frequency band is 6 kHz≤fre<10 kHz, the second information may indicate a start frequency of 6 kHz and a center frequency of 8 kHz that are of the target acoustic wave frequency band.

Alternatively, the second information indicate an end frequency and a center frequency. Assuming that a range of a frequency fre of the target acoustic wave frequency band is 6 kHz≤fre<10 kHz, the second information may indicate an end frequency of 10 kHz and a center frequency of 8 kHz that are of the target acoustic wave frequency band.

In some other possible design solutions, the second information may indicate a frequency band identifier of the target acoustic wave frequency band.

The frequency band identifier may also be referred to as a frequency band index.

Optionally, the frequency band identifier may be implemented by using one or more bits.

When the at least two candidate acoustic wave frequency bands include two frequency bands, the frequency band identifier may be implemented by using one bit. It is assumed that the at least two candidate acoustic wave frequency bands include a frequency band whose range of a frequency fre is 6 kHz≤fre<10 kHz and a frequency band whose range of a frequency fre is 14 kHz≤fre<18 kHz. For example, a frequency band identifier of the frequency band whose range of the frequency fre is 6 kHz≤fre<10 kHz may be "0", and a frequency band identifier of the frequency band whose range of the frequency fre is 14 kHz≤fre<18 kHz may be "1". If the range of the frequency fre of the target acoustic wave frequency band is 6 kHz≤fre<10 kHz, the second information may indicate "0".

When the at least two candidate acoustic wave frequency bands include three or more frequency bands, the frequency band identifier may be implemented by using a plurality of bits. The following uses an example in which the at least two candidate acoustic wave frequency bands include three frequency bands. It is assumed that ranges of frequencies fre of the at least two candidate acoustic wave frequency bands are respectively 6 kHz≤fre<10 kHz, 14 kHz≤fre<18 kHz, and 18 kHz≤fre<22 kHz. In this case, "00" may indicate the frequency band whose range of the frequency fre is 6 kHz≤fre<10 kHz, "01" may indicate the frequency band whose range of the frequency fre is 14 kHz≤fre<18 kHz, and "11" may indicate the frequency band whose range of the frequency fre is 18 kHz≤fre<22 kHz. In this case, "11" may not indicate any content, or "11" may indicate content other than the frequency band identifier.

It may be understood that the frequency band identifier of the candidate acoustic wave frequency band provided above is used as an example. In actual implementation, frequency band identifiers of different candidate acoustic wave frequency bands may be interchanged. For example, when the at least two candidate acoustic wave frequency bands include two frequency bands, a frequency band identifier of the frequency band whose range of the frequency fre is 6 kHz≤fre<10 kHz may be "1", and a frequency band identifier of the frequency band whose range of the frequency fre is 14 kHz≤fre<18 kHz may be "0". Alternatively, the frequency band identifier may be represented in another manner, for example, by using a name of a frequency band. Details are not described herein again.

When the at least two candidate acoustic wave frequency bands include three frequency bands, "00" may indicate the frequency band whose range of a frequency fre is 14 kHz≤fre<18 kHz, "01" may indicate the frequency band whose range of a frequency fre is 18 kHz≤fre<22 kHz, and "11" may indicate the frequency band whose range of a frequency fre is 6 kHz≤fre<10 kHz.

It may be understood that, in embodiments of this application, determining the target acoustic wave frequency band based on the first information may not be limited to determining the target acoustic wave frequency band based only on the first information, and the target acoustic wave frequency band may be further determined based on the first information and other information. For example, the target acoustic wave frequency band may be determined based on the first information and the frequency of the first acoustic wave frequency band.

In the determined target acoustic wave frequency band, the target acoustic wave frequency band may be different from the first acoustic wave frequency band. In this case, the method provided in FIG. 7A may include S704.

S704: The first terminal device switches, if the target acoustic wave frequency band is different from the first acoustic wave frequency band, to the target acoustic wave frequency band to continue receiving and/or sending the acoustic wave signal, to measure the relative orientation between the first terminal device and the second terminal device.

It may be understood that when the measurement method does not include S701, S704 may alternatively include: The first terminal device switches, if the target acoustic wave frequency band is different from the first acoustic wave frequency band, to the target acoustic wave frequency band to receive and/or send the acoustic wave signal, to measure the relative orientation between the first terminal device and the second terminal device.

In this case, as shown in FIG. 12, S704 includes S7.3: The first terminal device switches, if the target acoustic wave frequency band is different from the first acoustic wave frequency band, and the first terminal device receives acknowledgement information from the second terminal device, to the target acoustic wave frequency band to receive and/or send the acoustic wave signal. The acknowledgement information indicates that the second terminal device successfully receives the second information.

Optionally, that the first terminal device receives acknowledgement information from the second terminal device includes: The first terminal device receives the acknowledgement information from the second terminal device within a first duration threshold after sending the second information.

If the first terminal device receives the ACK from the second terminal device within the first duration threshold after sending the second information, the first terminal device receives the ACK from the second terminal device. If the first terminal device does not receive the ACK from the second terminal device within the first duration threshold after sending the second information, the first terminal device does not receive the ACK from the second terminal device.

It should be noted that, when the target acoustic wave frequency band is different from the first acoustic wave frequency band, the target acoustic wave frequency band may also be referred to as a second acoustic wave frequency band.

S7.3 may be implemented in any one of the following Manner 1 to Manner 3.

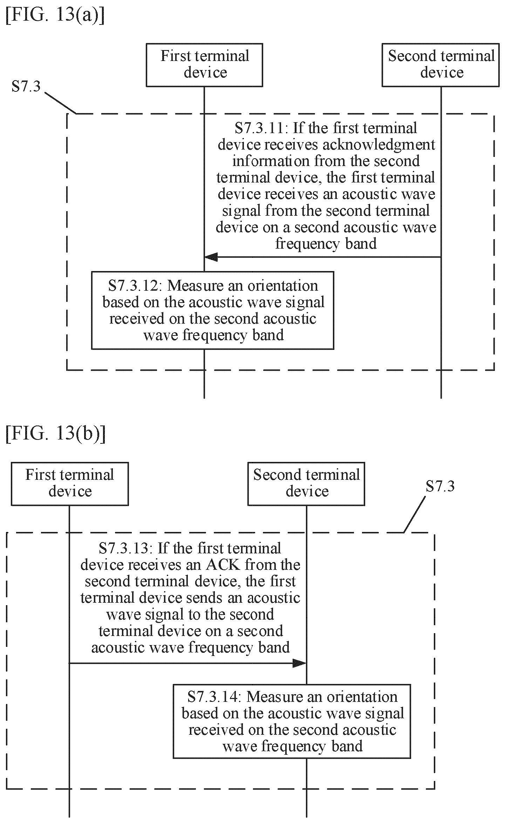

Manner 1: As shown in FIG. 13(a), S7.3 may include S7.3.11 and S7.3.12.

S7.3.11: If the first terminal device receives acknowledgement (acknowledgement, ACK) information from the second terminal device, the first terminal device receives an acoustic wave signal from the second terminal device on a second acoustic wave frequency band (that is, the target acoustic wave frequency band).

The acknowledgement information indicates that the second terminal device successfully receives second information.

It may be understood that, in this embodiment of this application, the ACK may be transmitted by using a radio frequency signal or an ultrasonic signal. This is not limited in this embodiment of this application.

S7.3.12: The first terminal device measures the orientation based on the acoustic wave signal received on the second acoustic wave frequency band.

Manner 2: As shown in FIG. 13(b), S7.3 may include S7.3.13 and S7.3.14.

S7.3.13: If the first terminal device receives an ACK from the second terminal device, the first terminal device sends an acoustic wave signal to the second terminal device on a second acoustic wave frequency band.

S7.3.14: The second terminal device measures the orientation based on the acoustic wave signal received on the second acoustic wave frequency band.

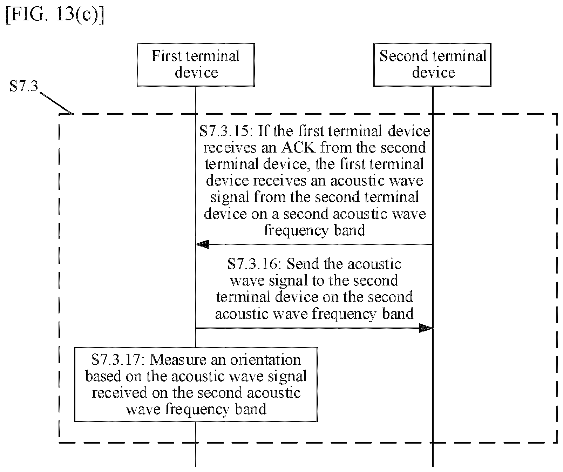

Manner 3: As shown in FIG. 13(c), S7.3 may include S7.3.15 to S7.3.17.

S7.3.15: If the first terminal device receives an ACK from the second terminal device, the first terminal device receives an acoustic wave signal from the second terminal device on a second acoustic wave frequency band.

S7.3.16: The first terminal device sends the acoustic wave signal to the second terminal device on the second acoustic wave frequency band.

S7.3.17: The first terminal device measures the orientation based on the acoustic wave signal received on the second acoustic wave frequency band.

In addition, with reference to FIG. 12, if the first terminal device receives the acknowledgement information from the second terminal device within the first duration threshold, the method provided in this embodiment of this application further includes S7.4: Before receiving the acknowledgement information, the first terminal device receives and/or sends the acoustic wave signal on the first acoustic wave frequency band, and receives and/or sends the acoustic wave signal on the target acoustic wave frequency band. For a specific implementation of S7.4, refer to S7.3 and the following S7.7. Details are not described herein.

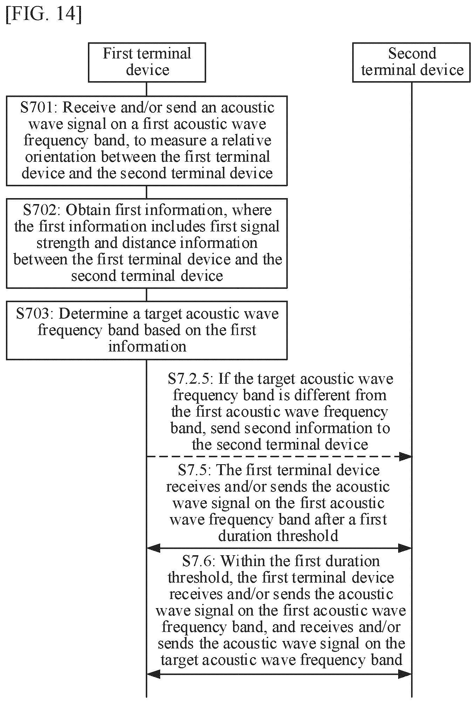

As shown in FIG. 14, when the target acoustic wave frequency band is different from the first acoustic wave frequency band, the first terminal device may separately detect the acoustic wave signal on the first acoustic wave frequency band and the acoustic wave signal on the target acoustic wave frequency band. In this case, if the first terminal device does not receive acknowledgement information from the second terminal device within the first duration threshold, the method provided in this embodiment of this application further includes S7.5: The first terminal device receives and/or sends the acoustic wave signal on the first acoustic wave frequency band after the first duration threshold. The acknowledgement information indicates that second terminal device successfully receives second information.

The first duration threshold may be 10 seconds.

If the first terminal device does not receive the ACK from the second terminal device, S7.5 may be implemented in any one of the following Manner 4 to Manner 6.

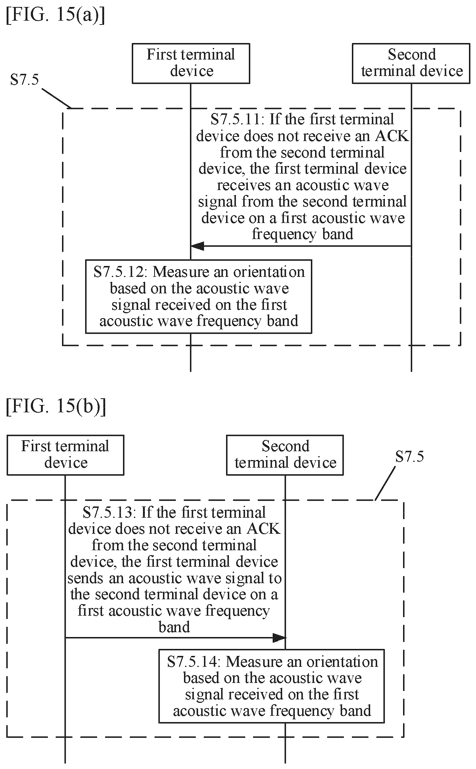

Manner 4: As shown in FIG. 15(a), S7.5 may include S7.5.11 and S7.5.12.

S7.5.11: If the first terminal device does not receive an ACK from the second terminal device, the first terminal device receives an acoustic wave signal from the second terminal device on the first acoustic wave frequency band.

S7.5.12: The first terminal device measures the orientation based on the acoustic wave signal received on the first acoustic wave frequency band.

Manner 5: As shown in FIG. 15(b), S7.5 may include S7.5.13 and S7.5.14.

S7.5.13: If the first terminal device does not receive an ACK from the second terminal device, the first terminal device sends an acoustic wave signal to the second terminal device on the first acoustic wave frequency band.

S7.5.14: The second terminal device measures the orientation based on the acoustic wave signal received on the first acoustic wave frequency band.

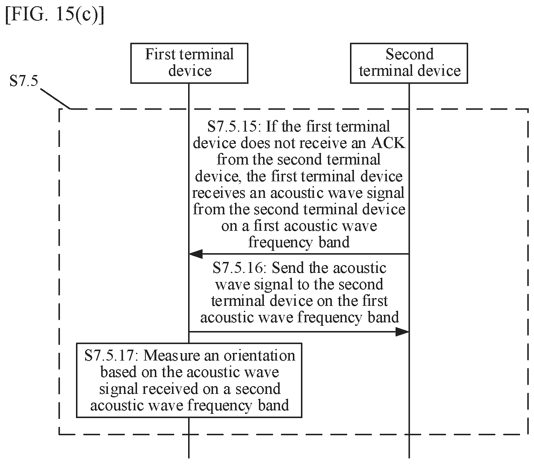

Manner 6: As shown in FIG. 15(c), S7.3 may include S7.5.15 to S7.5.17.

S7.5.15: If the first terminal device does not receive an ACK from the second terminal device, the first terminal device receives an acoustic wave signal from the second terminal device on the first acoustic wave frequency band.

S7.5.16: The first terminal device sends the acoustic wave signal to the second terminal device on the first acoustic wave frequency band.

S7.5.17: The first terminal device measures the orientation based on the acoustic wave signal received on the first acoustic wave frequency band.

It may be understood that, in this case, the first terminal device may further repeatedly perform S7.2.5. For example, the first terminal device may repeatedly perform S7.2.5 and steps after S7.2.5 at an interval of a second duration threshold.

The second duration threshold may be 30 seconds.

In this way, when the target acoustic wave frequency band is the second acoustic wave frequency band, the orientation is measured based on the ACK, so that power consumption for monitoring the acoustic wave signal by the first terminal device can be reduced.

With reference to FIG. 14, if the first terminal device does not receive the acknowledgement information from the second terminal device within the first duration threshold, the method provided in this embodiment of this application further includes S7.6: Within the first duration threshold, the first terminal device receives and/or sends the acoustic wave signal on the first acoustic wave frequency band, and receives and/or sends the acoustic wave signal on the target acoustic wave frequency band. For a specific implementation of S7.6, refer to S7.3 and S7.7. Details are not described herein.

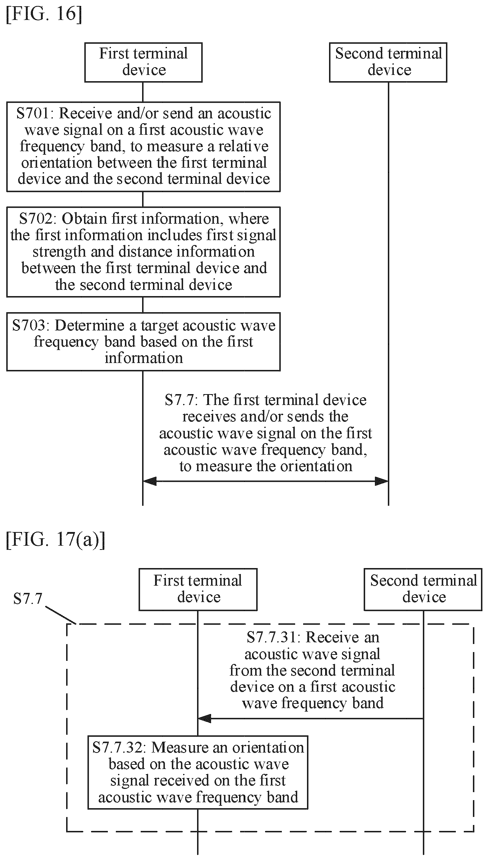

As shown in FIG. 16, when the target acoustic wave frequency band is the first acoustic wave frequency band, the method provided in this embodiment of this application may further include S7.7.

S7.7: The first terminal device receives and sends the acoustic wave signal on the first acoustic wave frequency band, to measure the orientation.

As shown in FIG. 17(a), in a possible design solution, S7.7 includes S7.7.31 and S7.7.32.

S7.7.31: The first terminal device receives the acoustic wave signal from the second terminal device on the first acoustic wave frequency band.

S7.7.32: The first terminal device measures the orientation based on the acoustic wave signal received on the first acoustic wave frequency band.

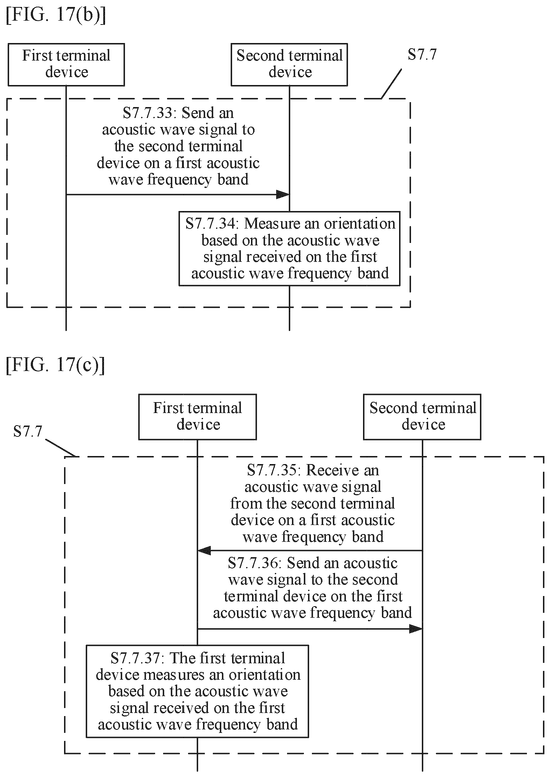

As shown in FIG. 17(b), in another possible design solution, S7.7 may include S7.7.33 and S7.7.34.

S7.7.33: The first terminal device sends the acoustic wave signal to the second terminal device on the first acoustic wave frequency band.

S7.7.34: The second terminal device measures the orientation based on the acoustic wave signal received on the first acoustic wave frequency band.

As shown in FIG. 17(c), in still another possible design solution, S7.7 may include S7.7.35 to S7.7.37.

S7.7.35: The first terminal device receives the acoustic wave signal from the second terminal device on the first acoustic wave frequency band.

S7.7.36: The first terminal device sends the acoustic wave signal to the second terminal device on the first acoustic wave frequency band.

S7.7.37: The first terminal device measures the orientation based on the acoustic wave signal received on the first acoustic wave frequency band.

According to the orientation measurement method provided in FIG. 7A, the first terminal device obtains the first information, and determines the target acoustic wave frequency band based on the first information including the first signal strength and the distance information. The first terminal device switches, when the target acoustic wave frequency band is different from the first acoustic wave frequency band, to the target acoustic wave frequency band to receive and/or send the acoustic wave signal, to measure the relative orientation between the first terminal device and the second terminal device. **In** this way, the target acoustic wave frequency band may be determined based on the first signal strength and the distance information, so that the target acoustic wave frequency band matches an actual scenario, for example, the distance between the terminal devices and an obstruction, thereby considering both the auditory experience and the effective distance for measuring the orientation.

The orientation in this embodiment may include an angle and/or a distance. For example, the distance may be a distance of the second terminal device relative to the first terminal device, or a distance of the first terminal device relative to the second terminal device. The distance may be an angle of the second terminal device relative to the first terminal device, or an angle of the first terminal device relative to the second terminal device.

The following describes a principle of measuring the orientation in embodiments of this application by using an angle as an example.

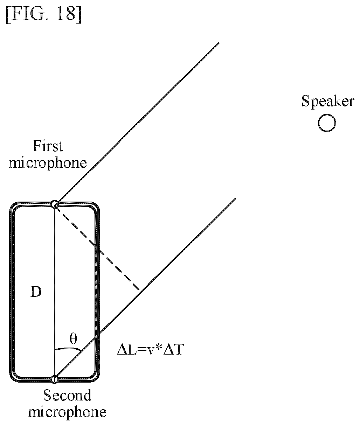

The angle may be determined based on a time difference of arrival. For example, with reference to FIG. 18, a first microphone and a second microphone are disposed on the first terminal device, and a speaker is disposed on the second terminal device. An acoustic wave signal sent by the speaker of the second terminal device may be transmitted to the first microphone and the second microphone of the first terminal device. It is assumed that the speaker of the second terminal device and the first microphone and the second microphone of the first terminal device form a signal far-field model. In this case, a path through which the acoustic wave signal from the speaker propagates to the first microphone is approximately parallel to a path through which the acoustic wave signal from the speaker propagates to the second microphone. Therefore, if a time difference between arrival of the acoustic wave signal sent by the speaker of the second terminal device at the first microphone and arrival of the acoustic wave signal at the second microphone is ΔT, an edge length ΔL of a right triangle in FIG. 18 is equal to v*ΔT, where v is a propagation speed of the acoustic wave signal. ΔL may be considered as a distance difference between the propagation paths of the acoustic wave signal sent by the speaker. The triangle is solved based on ΔL and a distance between the first microphone and the second microphone, to obtain an angle of arrival θ of a signal=arccos (ΔL/D), where D is the distance between the first microphone and the second microphone. Because the angle θ obtained through measurement by using the two microphones have a left-right mirror problem, the first terminal device may eliminate the left-right mirror problem further with reference to one microphone, for example, a third microphone or an inertial measurement unit (inertial measurement unit, IMU), to obtain a unique direction of arrival of the signal. For a specific implementation, refer to an existing conventional technology. Details are not described herein.

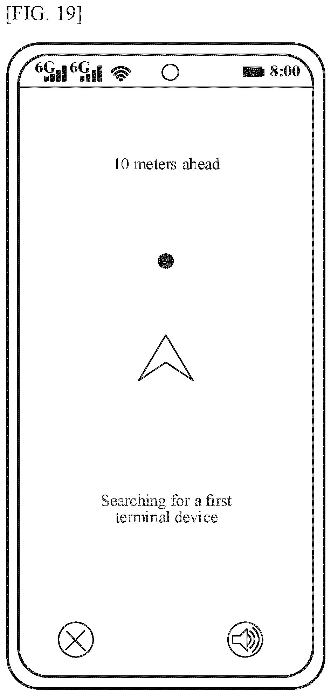

In this embodiment of this application, after determining the orientation of the second terminal device, the first terminal device may further display a position relationship between the second terminal device and the first terminal device. For example, if the orientation includes the distance and a direction that are of the second terminal device relative to the first terminal device, and the second terminal device is located 10 m in front of the first terminal device, an interface displayed in the first terminal device is shown in FIG. 19.

It may be understood that if the target acoustic wave frequency band is the same as the first candidate acoustic wave frequency band, the first terminal device may alternatively send fourth information to the second terminal device. Correspondingly, the second terminal device receives the fourth information from the first terminal device. The fourth information indicates that the target acoustic wave frequency band is the first acoustic wave frequency band.

For ease of understanding embodiments of this application, the following uses an example in which the first terminal device is a mobile phone, and the second terminal device is a tag disposed on a backpack, to describe the orientation measurement method provided in embodiments of this application with reference to the foregoing Scenario 2. In this case, a position of the backpack is a position of the tag disposed on the backpack.

In Example 1, at least two candidate acoustic wave frequency bands include three candidate acoustic wave frequency bands: a frequency band #2, a frequency band #3, and a frequency band 4. A range of a frequency fre of the frequency band #2 is 6 kHz≤fre<10 kHz, and a range of a frequency fre of the frequency band #3 is 14 kHz≤fre<18 kHz, a range of a frequency fre of the frequency band #4 is 18 kHz≤fre<22 kHz. A distance threshold for switching from the frequency band #2 to the frequency band #3 is 10 m, and a distance threshold for switching between the frequency band #3 and the frequency band #4 is 5 m. When there is no obstruction, an effective distance for measuring an orientation on the frequency band #4 is 5 m, and signal strength for the orientation measurement on the frequency band #4 needs to be greater than -70 dB.

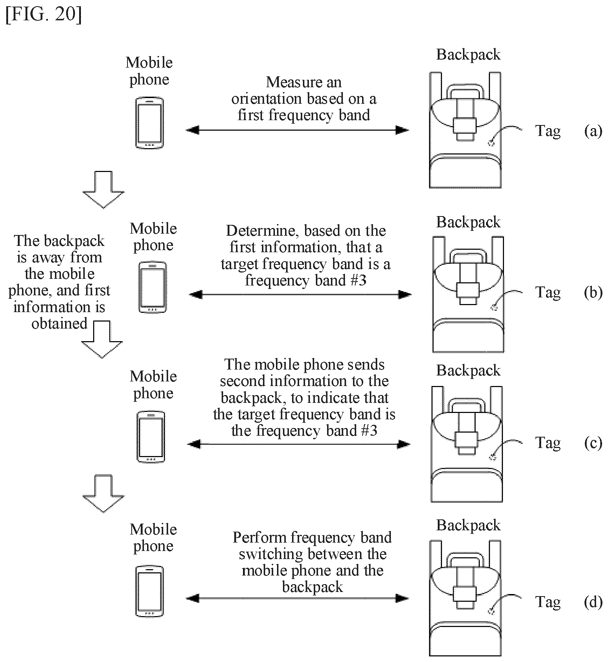

As shown in (a) in FIG. 20, after the mobile phone starts an "orientation measurement " APP and starts to measure an orientation, the mobile phone and the tag on the backpack measure an orientation based on the frequency band #4. As shown in (b) in FIG. 20, the backpack moves in a direction away from the mobile phone. In this process, the mobile phone obtains first information. When a distance between the mobile phone and the backpack exceeds 5 m, and first signal strength is less than -70 dB, after the mobile phone obtains the first information, the first terminal device determines, based on the first information, that a target acoustic wave frequency band is the frequency band #3. In this case, as shown in (c) in FIG. 20, the first terminal device sends second information to the second terminal device, to indicate that the target acoustic wave frequency band is the frequency band #3. After the first terminal device sends the second information, as shown in (d) in FIG. 20, the first terminal device and the second terminal device perform frequency band switching, that is, measure the orientation by using the frequency band #3. Alternatively, after the first terminal device sends the second information to the second terminal device, if both the first terminal device and the second terminal device detect that interference on the frequency band #3 is greater than an interference threshold, the first terminal device and the second terminal device may not perform frequency band switching, that is, still use the frequency band #4 for orientation measurement.

In addition, in this embodiment of this application, the acoustic wave used for ranging and angle measurement may be further divided into four or more frequency bands. When the acoustic wave used for the ranging and the angle measurement is divided into four or more frequency bands, a principle of switching the frequency band used for the ranging and the angle measurement is similar to a principle of switching a frequency band when an acoustic wave used for ranging and angle measurement is divided into two or three frequency bands. Details are not described herein again.

It should be noted that, in the foregoing embodiments, an example in which the first terminal device is the mobile phone is used for description. It may be understood that the mobile phone in the foregoing embodiments may alternatively be another terminal device, for example, a smartwatch or a tablet computer. This is not limited in embodiments of this application.

In addition, in the foregoing embodiments, an Android system is used as an example to describe a specific method for implementing control of the terminal device between functional modules. It may be understood that corresponding functional module may also be disposed in another operating system, for example, a HarmonyOS system, to implement the foregoing orientation measurement method. Provided that functions implemented by the functional modules are similar to those in embodiments of this application, the functional modules fall within the scope of the claims of this application and equivalent technologies thereof.

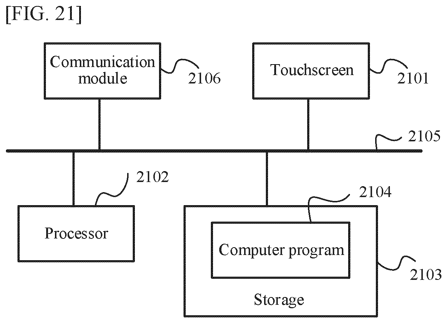

As shown in FIG. 21, an embodiment of this application discloses a terminal device. The terminal device may be the first terminal device in the foregoing embodiments, for example, a mobile phone, or may be the second terminal device in the foregoing embodiments, for example, a tag. The terminal device may specifically include one or more processors 2102, a storage 2103, a communication module 2106, one or more APPs (not shown), and one or more computer programs 2104. The foregoing devices may be connected by using one or more communication buses 2105. The one or more computer programs 2104 are stored in the storage 2103 and configured to be executed by the one or more processors 2102. The one or more computer programs 2104 include instructions, and the instructions may be used to perform related steps performed by the first terminal device in the foregoing embodiments, or may be used to perform related steps performed by the second terminal device in the foregoing embodiments.

In some possible design solutions, the terminal device may further include a touchscreen 2101, and the touchscreen 2101 includes a touch sensor and a display screen.

An embodiment of this application further provides a computer-readable storage medium. The computer-readable storage medium includes a computer program (which may also be referred to as computer instructions). When the computer program is run on a computer, the computer is enabled to perform functions or steps performed by the mobile phone in the orientation measurement method shown in FIG. 7A.

In addition, an embodiment of this application may further provide a computer program product. The computer program product includes a computer program. When the computer program is run on a computer, the computer is enabled to perform functions or steps performed by the mobile phone in the orientation measurement method shown in FIG. 7A.

In several embodiments provided in this application, it should be understood that the disclosed apparatuses and methods may be implemented in other manners. For example, the described apparatus embodiments are merely examples. For example, module or unit division is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

Through descriptions of the foregoing implementations, persons skilled in the art may clearly understand that, for the purpose of convenient and brief description, division into the foregoing functional modules is used as an example for description. During actual application, the foregoing functions may be allocated to different functional modules and completed based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to conventional technologies, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps in the methods described in embodiments of this application. The foregoing storage medium includes any medium that can store program code, such as a flash memory, a removable hard disk, a read-only memory, a random access storage, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. An orientation measurement method, wherein the method comprises:
receiving and/or sending, by a first terminal device, an acoustic wave signal on a first acoustic wave frequency band, to measure a relative orientation between the first terminal device and a second terminal device;
obtaining, by the first terminal device, first information, wherein the first information comprises first signal strength and distance information between the second terminal device and the first terminal device;
determining, by the first terminal device, a target acoustic wave frequency band based on the first information, wherein the target acoustic wave frequency band is one of at least two candidate acoustic wave frequency bands; and
switching, by the first terminal device if the target acoustic wave frequency band is different from the first acoustic wave frequency band, to the target acoustic wave frequency band to receive and/or send the acoustic wave signal, to continue measuring the relative orientation between the first terminal device and the second terminal device.

2. The method according to claim 1, wherein the distance information indicates a first distance between the first terminal device and the second terminal device, or indicates that the distance between the first terminal device and the second terminal device is not detected.

3. The method according to claim 1 or 2, wherein the determining, by the first terminal device, a target acoustic wave frequency band based on the first information comprises:
if the first signal strength and the distance information meet a first condition, determining a first candidate acoustic wave frequency band corresponding to the first condition as the target acoustic wave frequency band; or
if the first signal strength and the distance information meet a second condition, determining a second candidate acoustic wave frequency band corresponding to the second condition as the target acoustic wave frequency band, wherein
the first condition comprises: the first distance is greater than a first distance threshold, and/or the first signal strength is less than or equal to a first strength threshold;
the second condition comprises: the first distance is less than or equal to a second distance threshold, and the first signal strength is greater than a second strength threshold; or the distance between the first terminal device and the second terminal device is not detected, and the first signal strength is greater than a third strength threshold, wherein the third strength threshold is greater than the second strength threshold; and
a frequency of the first candidate acoustic wave frequency band is lower than a frequency of the second candidate acoustic wave frequency band.

4. The method according to claim 1 or 2, wherein the determining, by the first terminal device, a target acoustic wave frequency band based on the first information comprises:
if the first signal strength and the distance information meet a first condition, determining a first candidate acoustic wave frequency band corresponding to the first condition as the target acoustic wave frequency band;
if the first signal strength and the distance information meet a second condition, determining a second candidate acoustic wave frequency band corresponding to the second condition as the target acoustic wave frequency band; or
if the first signal strength and the distance information meet a third condition, determining a third candidate acoustic wave frequency band corresponding to the third condition as the target acoustic wave frequency band, wherein
the first condition comprises: the first distance is greater than a first distance threshold, and/or the first signal strength is less than or equal to a first strength threshold;
the second condition comprises: the first distance is less than or equal to a second distance threshold, and the first signal strength is greater than a second strength threshold; or the distance between the first terminal device and the second terminal device is not detected, and the first signal strength is greater than a third strength threshold, wherein the third strength threshold is greater than the second strength threshold;
the third condition comprises: the first distance is greater than the second distance threshold and less than or equal to the first distance threshold, and/or the first signal strength is greater than a fourth strength threshold and less than a fifth strength threshold, wherein the fourth strength threshold is less than the second strength threshold, and the fifth strength threshold is greater than the first strength threshold; and
a frequency of the first candidate acoustic wave frequency band is lower than a frequency of the third candidate acoustic wave frequency band, and the frequency of the third candidate acoustic wave frequency band is lower than a frequency of the second candidate acoustic wave frequency band.

5. The method according to claim 1 or 2, wherein the determining, by the first terminal device, a target acoustic wave frequency band based on the first information comprises:
if the first signal strength and the distance information meet a first condition, and candidate acoustic wave frequency bands meeting a fourth condition exist in the at least two candidate acoustic wave frequency bands, determining one of the candidate acoustic wave frequency bands meeting the fourth condition in the at least two candidate acoustic wave frequency bands as the target acoustic wave frequency band, wherein
the first condition comprises: the first distance is greater than a first distance threshold, and/or the first signal strength is less than or equal to a first strength threshold; and
the fourth condition comprises: a frequency of the candidate acoustic wave frequency band is lower than a frequency of the first acoustic wave frequency band.

6. The method according to claim 5, wherein the target acoustic wave frequency band is a candidate acoustic wave frequency band with a highest frequency in the candidate acoustic wave frequency bands meeting the fourth condition.

7. The method according to claim 6, wherein if two candidate acoustic wave frequency bands whose frequencies are lower than the frequency of the first acoustic wave frequency band exist in the at least two candidate acoustic wave frequency bands, and the first condition comprises: the first distance is greater than the first distance threshold, the first condition further comprises:
the first distance is less than or equal to a third distance threshold, wherein the third distance threshold is greater than the first distance threshold; and the third distance threshold is determined based on a candidate acoustic wave frequency band with a higher frequency in the two candidate acoustic wave frequency bands whose frequencies are lower than the frequency of the first acoustic wave frequency band.

8. The method according to claim 1 or 2, wherein the determining, by the first terminal device, a target acoustic wave frequency band based on the first information comprises:
if the first signal strength and the distance information meet a second condition, and candidate acoustic wave frequency bands meeting a fifth condition exist in the at least two candidate acoustic wave frequency bands, determining, as the target acoustic wave frequency band, one of the candidate acoustic wave frequency bands meeting the fifth condition in the at least two candidate acoustic wave frequency bands, wherein
the second condition comprises: the first distance is less than or equal to a second distance threshold, and the first signal strength is greater than a second strength threshold; or the distance between the first terminal device and the second terminal device is not detected, and the first signal strength is greater than a third strength threshold, wherein the third strength threshold is greater than the second strength threshold; and
the fifth condition comprises: a frequency of the candidate acoustic wave frequency band is higher than a frequency of the first acoustic wave frequency band.

9. The method according to claim 8, wherein the target acoustic wave frequency band is a candidate acoustic wave frequency band with a lowest frequency in the candidate acoustic wave frequency bands meeting the fifth condition.

10. The method according to claim 9, wherein if two candidate acoustic wave frequency bands whose frequencies are higher than a frequency of the first acoustic wave frequency band exist in the at least two candidate acoustic wave frequency bands, and the second condition comprises: the first distance is less than or equal to the second distance threshold, the second condition further comprises: the first distance is greater than a fourth distance threshold, wherein the fourth distance threshold is less than the second distance threshold, and the fourth distance threshold is determined based on a candidate acoustic wave frequency band with a lower frequency in the two candidate acoustic wave frequency bands whose frequencies are higher than the frequency of the first acoustic wave frequency band.

11. The method according to any one of claims 1 to 10, wherein the switching, by the first terminal device if the target acoustic wave frequency band is different from the first acoustic wave frequency band, to the target acoustic wave frequency band to receive and/or send the acoustic wave signal comprises:
switching, by the first terminal device if the target acoustic wave frequency band is different from the first acoustic wave frequency band, and signal strength of an interference signal on the target acoustic wave frequency band is less than or equal to an interference signal threshold, to the target acoustic wave frequency band to receive and/or send the acoustic wave signal.

12. The method according to claim 11, wherein the method further comprises:
if the target acoustic wave frequency band is different from the first acoustic wave frequency band, and the signal strength of the interference signal on the target acoustic wave frequency band is greater than the interference signal threshold, receiving and/or sending, by the first terminal device, the acoustic wave signal on a candidate acoustic wave frequency band other than the target acoustic wave frequency band in the at least two candidate acoustic wave frequency bands.

13. The method according to claim 11, wherein the method further comprises:
displaying, by the first terminal device, first notification information if the target acoustic wave frequency band is different from the first acoustic wave frequency band, and the signal strength of the interference signal on the target acoustic wave frequency band is greater than the interference signal threshold, wherein the first notification information indicates that the signal strength of the interference signal on the target acoustic wave frequency band is greater than the interference signal threshold.

14. The method according to any one of claims 3 to 8, wherein the first strength threshold, the second strength threshold, the third strength threshold, the fourth strength threshold, or the fifth strength threshold is associated with the frequency of the first acoustic wave frequency band.

15. The method according to claim 2, wherein if the at least two candidate acoustic wave frequency bands comprise two candidate acoustic wave frequency bands, the first acoustic wave frequency band is one of the two candidate acoustic wave frequency bands, and a frequency of the first acoustic wave frequency band is higher than a frequency of a fourth candidate acoustic wave frequency band, wherein the fourth candidate acoustic wave frequency band is a candidate acoustic wave frequency band other than the first acoustic wave frequency band in the two candidate acoustic wave frequency bands, and the first information further comprises signal strength of an interference signal on the fourth candidate acoustic wave frequency band, the determining, by the first terminal device, a target acoustic wave frequency band based on the first information comprises:
determining the fourth candidate acoustic wave frequency band as the target acoustic wave frequency band if the first information meets a fourteenth condition, wherein the fourteenth condition comprises: the first signal strength is less than or equal to a sixth strength threshold, and the signal strength of the interference signal on the fourth candidate acoustic wave frequency band is less than or equal to an interference signal threshold corresponding to the fourth candidate acoustic wave frequency band, wherein the sixth strength threshold is determined based on the first distance.

16. The method according to claim 15, wherein that the first signal strength is less than or equal to a sixth strength threshold means that in M1 times of signal strength and interference signal measurement, the first signal strength obtained in each time of signal strength and interference signal measurement is less than or equal to the sixth strength threshold; and
that the signal strength of the interference signal on the fourth candidate acoustic wave frequency band is less than or equal to an interference signal threshold corresponding to the fourth candidate acoustic wave frequency band means that, in the M1 times of signal strength and interference signal measurement, the signal strength that is of the interference signal on the fourth candidate acoustic wave frequency band and that is obtained in each time of signal strength and interference signal measurement is less than or equal to the interference signal threshold corresponding to the fourth candidate acoustic wave frequency band, wherein M1 is an integer greater than or equal to 1.

17. The method according to claim 2, wherein if the at least two candidate acoustic wave frequency bands comprise two candidate acoustic wave frequency bands, the first acoustic wave frequency band is one of the two candidate acoustic wave frequency bands, and a frequency of the first acoustic wave frequency band is lower than a frequency of a fifth candidate acoustic wave frequency band, wherein the fifth candidate acoustic wave frequency band is a candidate acoustic wave frequency band other than the first acoustic wave frequency band in the two candidate acoustic wave frequency bands, and the first information further comprises signal strength of an interference signal on the first acoustic wave frequency band, the determining, by the first terminal device, a target acoustic wave frequency band based on the first information comprises:
determining the fifth candidate acoustic wave frequency band as the target acoustic wave frequency band if the first information meets a fifteenth condition, wherein the fifteenth condition comprises: the first signal strength is greater than a seventh strength threshold, and/or the signal strength of the interference signal on the first acoustic wave frequency band is greater than an interference signal threshold corresponding to the fifth candidate acoustic wave frequency band, wherein the seventh strength threshold is determined based on the first distance.

18. The method according to claim 17, wherein that the first signal strength is less than or equal to a seventh strength threshold means that in M2 times of signal strength measurement, the first signal strength obtained in each time of signal strength measurement is less than or equal to the seventh strength threshold, wherein M2 is an integer greater than or equal to 1; and
that the signal strength of the interference signal on the first acoustic wave frequency band is greater than an interference signal threshold corresponding to the fifth candidate acoustic wave frequency band means that in M3 times of interference signal measurement, the signal strength that is of the interference signal on the first acoustic wave frequency band and that is obtained in each time of interference signal measurement is greater than the interference signal threshold corresponding to the fifth candidate acoustic wave frequency band, wherein M3 is an integer greater than or equal to 1.

19. The method according to any one of claims 1 to 18, wherein the first signal strength comprises signal strength of one or more of the following signals: a radio frequency signal or an acoustic wave signal.

20. The method according to any one of claims 1 to 19, wherein the method further comprises:
sending, by the first terminal device, second information to the second terminal device if the target acoustic wave frequency band is different from the first acoustic wave frequency band, wherein the second information indicates the second terminal device to switch to the target acoustic wave frequency band.

21. The method according to claim 20, wherein the sending, by the first terminal device, second information to the second terminal device comprises:
sending, by the first terminal device, the second information to the second terminal device over a radio frequency communication link.

22. The method according to claim 20 or 21, wherein the switching, by the first terminal device if the target acoustic wave frequency band is different from the first acoustic wave frequency band, to the target acoustic wave frequency band to receive and/or send the acoustic wave signal comprises:
switching, by the first terminal device if the target acoustic wave frequency band is different from the first acoustic wave frequency band, and the first terminal device receives acknowledgement information from the second terminal device, to the target acoustic wave frequency band to receive and/or send the acoustic wave signal, wherein
the acknowledgement information indicates that the second terminal device successfully receives the second information.

23. The method according to claim 22, wherein that the first terminal device receives
acknowledgement information from the second terminal device comprises: the first terminal device receives the acknowledgement information from the second terminal device within a first duration threshold after sending the second information.

24. The method according to claim 20 or 21, wherein the method further comprises:
if the first terminal device receives acknowledgement information from the second terminal device within a first duration threshold, before receiving the acknowledgement information, receiving and/or sending, by the first terminal device, the acoustic wave signal on the first acoustic wave frequency band, and receiving and/or sending the acoustic wave signal on the target acoustic wave frequency band;
if the first terminal device does not receive the acknowledgement information from the second terminal device within the first duration threshold, within the first duration threshold, receiving and/or sending, by the first terminal device, the acoustic wave signal on the first acoustic wave frequency band, and receiving and/or sending the acoustic wave signal on the target acoustic wave frequency band; or
if the first terminal device does not receive the acknowledgement information from the second terminal device within the first duration threshold, receiving and/or sending, by the first terminal device, the acoustic wave signal on the first acoustic wave frequency band after the first duration threshold, wherein
the acknowledgement information indicates that the second terminal device successfully receives the second information.

25. The method according to any one of claims 1 to 24, wherein the first acoustic wave frequency band is determined based on a second distance between the first terminal device and the second terminal device, and the second distance is a distance obtained based on a radio frequency signal between the first terminal device and the second terminal device.

26. The method according to any one of claims 1 to 24, further comprising:
if the target acoustic wave frequency band is the same as the first acoustic wave frequency band, continuing, by the first terminal device, receiving and/or sending the acoustic wave signal on the first acoustic wave frequency band, to continue measuring the relative orientation between the first terminal device and the second terminal device.

27. An apparatus, comprising a processor, wherein the processor is coupled to a storage; and
the processor is configured to execute computer instructions stored in the storage, to enable the apparatus to perform the orientation measurement method according to any one of claims 1 to 26.

28. A terminal device, wherein the terminal device comprises a processor and a transceiver, the transceiver is configured to exchange information between the terminal device and another terminal device, and the processor executes program instructions, to enable the terminal device to perform the orientation measurement method according to any one of claims 1 to 26.

29. A communication system, wherein the communication system comprises a second terminal device and a first terminal device, and
the first terminal device is configured to perform the method according to any one of claims 1 to 26.

30. A computer-readable storage medium, wherein the computer-readable storage medium comprises a computer program or instructions, and when the computer program or the instructions are run on a computer, the computer is enabled to perform the orientation measurement method according to any one of claims 1 to 26.

31. A computer program product, wherein the computer program product comprises a computer program or instructions, and when the computer program or the instructions are run on a computer, the computer is enabled to perform the orientation measurement method according to any one of claims 1 to 26.
